# EUROPÄISCHE PATENTSCHRIFT

(11) **EP 2 222 609 B1**
(45) Veröffentlichungstag und Bekanntmachung des Hinweises auf die Patenterteilung: **22.06.2011**
(21) Anmeldenummer: 08785092.1
(22) Anmeldetag: 25.07.2008
(51) Int. Cl.: C03C 8/12, C03C 8/14, C03C 8/24, E06B 3/663

(54) **WÄRMEDÄMMENDES VERGLASUNGSELEMENT UND VERFAHREN ZU DESSEN HERSTELLUNG**
HEAT-INSULATING GLAZING ELEMENT AND PROCESS FOR PRODUCING IT
ÉLÉMENT DE VITRAGE THERMO-ISOLANT ET SON PROCÉDÉ DE PRODUCTION

(30) Priorität: 12.11.2007 DE 102007053824
(43) Veröffentlichungstag der Anmeldung: 01.09.2010
(73) Patentinhaber: FuTech GmbH, 39124 Magdeburg (DE)
(72) Erfinder: JÄGER, Steffen, 38122 Braunschweig (DE)
(86) Internationale Anmeldenummer: PCT/EP2008/006139
(87) Internationale Veröffentlichungsnummer: WO 2009/062557

(56) Entgegenhaltungen:
- EP-A- 0 237 938
- WO-A-01/61135
- CN-A- 1 587 147
- DE-A1- 2 163 723
- DATABASE WPI Week 200640 Thomson Scientific, London, GB; AN 2006-392993 XP002506804 & WO 2006/059492 A (ASAHI GLASS CO LTD) 8. Juni 2006 (2006-06-08)

## Beschreibung

### Gegenstand der Erfindung

Die Erfindung betrifft ein wärmedämmendes Verglasungselement mit den Merkmalen des Oberbegriffs von Anspruch 1, und Verfahren zu dessen Herstellung. Es werden auch Verwendungen des Verglasungselements beschrieben.

### Stand der Technik

Es ist bekannt, Vakuum-Isolierglas mit zwei Glasscheiben herzustellen, die einen evakuierten Raum einschließen und über definierte Abstandhalter und eine umlaufende Randdichtung miteinander verbunden sind. Die Erzeugung des Vakuums im evakuierten Raum im Druckbereich von mindestens 10⁻¹ Pa bis 10⁻³ Pa und darunter kann durch ein Evakuierungsrohr über eine in einer der Glasscheibenoberflächen oder an der Randabdichtung angeordnete Öffnung erfolgen. Zwischen den Glasplatten sind zur Einstellung eines genau definierten Abstandes Abstandhalter (Distanzierungseinrichtungen) über die gesamte Fläche hinweg verteilt angeordnet. Die Anordnung der Abstandhalter erfolgt z. B. ähnlich einem gleichmäßigen Punktraster mit einem Abstand zueinander von 20 mm bis rd. 50 mm. Die Anordnung der Abstandhalter muss nicht unbedingt gleichmäßig erfolgen. Die Anzahl, die Größe, die Form, das einzusetzende Material und die Verteilung der Abstandhalter sowie auch die Abstände der Glasplatten zueinander werden vom Anwender so festgelegt, dass das Verglasungssystem eine für die praktische Nutzung ausreichende Festigkeit hat, die Glasplatten bei Einwirkung der Druckkräfte und sonstiger mechanischer und/oder thermomechanischer Belastungen nicht aneinander stoßen, die Glasoberflächen nicht verletzt bzw. zerstört werden und potentielle Kältebrücken minimiert werden. Es wird auch berücksichtigt, dass die Abstandhalter einen ästhetisch ansprechenden Eindruck ergeben. Dabei gilt es, die Abstandhalter möglichst so zu gestalten, dass die von ihnen beanspruchten Positionen mit dem bloßen Auge kaum sichtbar sind sowie hinsichtlich ihrer Reflexion und Farbe für den Anwender nicht störend wirken.

Aufgrund der mitunter großen Anzahl der benötigten Abstandhalter (z. B. rd. 1600 Stück pro m² bei einer gegenseitigen Distanz der Abstandhalter von etwa 25 mm) und den hohen mechanischen und thermomechanischen Belastungen werden neben den Anforderungen an die Materialeigenschaften der Abstandhalter auch Anforderungen an die Verfahrenstechnologie hinsichtlich Präzision, Zuverlässigkeit und Reproduzierbarkeit gestellt. Dabei muss berücksichtigt werden, dass schon das Fehlen eines einzelnen Abstandhalters zu einem Glasbruch und somit zu einem Versagen des gesamten Bauteils führen kann. Beschädigungen oder Zerstörungen an den Verglasungselementen werden insbesondere auch dann festgestellt, wenn zu große Toleranzen bzw. Schwankungen in der Höhe der Abstandhalter vorhanden sind. Unter gewissen Bedingungen sind schon geringe Differenzen von einigen wenigen Mikrometern ausreichend. Somit sind solche Verfahren sowohl zur Herstellung der Abstandhalter als auch zu deren Positionierung und Anbringung auf den Glasplattenoberflächen anzuwenden, die eine minimale Ausschussquote aufweisen und gleichzeitig kostengünstig sind.

Diese Anforderungen werden durch herkömmliche Verfahren nicht befriedigend gelöst. Einige Nachteile sowie verfahrens- und technologiebezogene Probleme bei den herkömmlichen Vakuum-Isoliergläsern sind nachstehend näher beschrieben.

In EP 0 963 961 wird ein Vakuum-Isolierglas beschrieben, bei dem zylinderförmige Abstandhalter aus einer Aluminiumverbindung oder einem anderen Metall verwendet werden. Die Abstandhalter werden lose zwischen die Glasplatten gelegt, ohne dass eine feste Anbindung zwischen den Glasplatten und den Abstandhaltern besteht. Mittels eines Stanzapparates werden die Abstandhalter bereitgestellt und in die gewünschte Position gebracht. Nachteilig bei diesem Verfahren ist, dass es aufgrund der fehlenden festen Anbindung der Abstandhalter mitunter dazu kommt, dass sich Abstandhalter schon während der Herstellung oder bei der Verwendung des Vakuum-Isolierglases verschieben. Mitunter ist es sogar möglich, dass Abstandhalter an den erforderlichen Positionen ganz fehlen. Dies führt dazu, dass von außen einwirkende hohen Druckkräfte (ca. 10 to pro m² und darüber) nicht gleichmäßig aufgenommen und verteilt werden können. Daher kommt es oft zu hohen lokalen Spannungen in den Glasplatten, wodurch sich Risse oder andere Schädigungen ausbilden können. Durch die Verwendung von metallischen Abstandhaltern entstehen außerdem erhebliche Wärmeleitungsverluste, so dass die Wärmedämmung des Verglasungselementes verschlechtert wird.

In WO 87/03327 werden als Abstandhalter dünne, transparente Scheibchen, die auf den Glasplatten aufliegend ausgebildet sind, verwendet. Die Scheibchen werden z. B. aus Tafel- bzw. Bandmaterial oder zylindrischen Werkstoffen aus Kunststoff, beispielsweise Polyester oder PTFE, gefertigt. Zur Positionierung der Abstandhalter wird vorgeschlagen, ein Folienband über die Glasplatten zu führen und mittels einer oder mehrerer Stanzeinrichtungen die Scheibchen aus dem Folienband herauszutrennen, wobei der Stanzling entweder direkt auf die richtige Lage fällt oder vom Stempel dorthin gedrückt wird. Weitere Möglichkeiten bestehen darin, die Abstandhalter durch eine Lochplatte aufzustreuen, in Form einer Paste aufzudrucken oder mit einer gelochten Walze aufzurollen.

In EP 0 645 516 werden zylinderförmige Abstandhalter aus körnigen Keramikmaterial mit hoher Schmelztemperatur vorgeschlagen, das von einem Glaslot ummantelt ist. Durch Erwärmung wird das Glaslot aufgeschmolzen, um zum Beispiel durch ein Siebdruckverfahren oder mittels einer Mikrospritze die Abstandhalter direkt an Glasplattenoberflächen zu befestigen. Für dieses Verfahren ist es notwendig, dass das körnige Keramikmaterial während des Aufschmelzens des Glaslotes nicht schmelzen kann. Nur so kann sichergestellt werden, dass sich die Form und Höhe der Abstandhalter erhalten lassen. Andernfalls würde bei der Wärmebehandlung das Glaslot auf der Glasoberfläche verlaufen.

In EP 1 055 047 wird ein Verfahren beschrieben, bei dem lokal auf einer Glasplattenoberfläche Klebepunkte aufgebracht werden. Kugelförmige Abstandhalter werden über die Oberfläche gerollt, um an den Klebepunkten festkleben. Ein ähnliches Verfahren sieht gemäß EP 0 854 966 vor, wobei erst mittels Siebdruck eine dünne anorganische Klebstoffverbindung auf die Glasplattenoberfläche aufgebracht wird. Dann werden vorgefertigte Abstandhalter genau auf der angebrachten Klebstoffverbindung abgelegt. Die Abstandhalter werden so hergestellt, dass kompakte Glas- oder Keramikkugeln zweiseitig parallel abgeschnitten werden, so dass sich eine tonnenartige Form ergibt. Zur Herstellung dieser Geometrie wird vorgeschlagen, die Kugeln in einem Harz in Form einer einlagigen Schicht einzubetten, um die Schicht und somit die Kugeln anschließend an beiden Seiten zu erodieren. Die tonnenförmigen Abstandhalter werden durch ein Saugwerkzeug an die gewünschten Positionen auf der Glasplattenoberfläche gebracht und dort abgelegt. In einer weiteren Variante werden die Abstandhalter zum Beispiel in Zinn eingebettet, welches dann auf der Glasplattenoberfläche vergossen wird. Danach wird das Einbettungsmaterial entfernt.

Ein erster Nachteil der bekannten Verfahren, bei denen die Abstandhalter aus aufgeklebten Formkörpern gebildet sind, ist deren für die Praxis ungenügende mechanische Belastbarkeit, insbesondere gegenüber Scherbeanspruchungen. Die Formkörper wirken als die wesentlichen Stützen, durch die von außen einwirkende mechanische Lasten aufgenommen werden müssen, während der Klebstoff lediglich eine Haftung zu den Glasoberflächen erzeugt. Die Festigkeit der Formkörper-Klebstoff-Kontaktstelle ist nicht ausreichend, um den bei der ständigen Hin-und-Her-Bewegung der Glasplatten auftretenden Kräften wirksam entgegenwirken zu können. Es kommt im Belastungsfalle oftmals zu einem Ausbrechen oder Herausreißen der Abstandhalter aus den Klebestellen und damit zu einer Beschädigung des Verglasungselementes.

Als ganz besonders anfällig haben sich Abstandhalter erwiesen, die aus einem Metall oder einer Keramik gebildet sind, die mit einem Glaslot ummantelt sind oder mit einem solchen verklebt werden. Hier treten bei mechanischer oder thermomechanischer Belastung an den Grenzflächen zwischen den vorgeformten Abstandhaltern und dem Einbettungs- oder Klebematerialien und/oder zwischen der Glasplatte und dem Einbettungs- oder Klebematerialien zusätzlich Risse, Abplatzungen oder andere Schädigungen auf. Auf Grund dieser ungenügenden mechanischen Festigkeit der Abstandhalter kommt es in der Praxis häufig zu einem Totalausfall der Verglasungselemente.

Ein weiterer Nachteil besteht darin, dass es mit den herkömmlichen Druckverfahren (z. B. Siebdruck) nicht möglich ist, die Abstandhalter einerseits mit der gewünschten Höhe von z. B. 150 µm und größer in hoher Präzision und Reproduzierbarkeit bereitzustellen und andererseits mit einer hohen Genauigkeit auf den Glasoberflächen zu positionieren. Die bekannten Druckverfahren erlauben nur geringe Höhen von einigen wenigen 10 µm, die für die Verwendung in Vakuum-Isoliergläsern nicht ausreichen. Darüber hinaus zeigt sich in der Praxis, dass es bei Verwendung von Schablonen oftmals zu unerwünschten, wenig kontrollierbaren Ablagerungen oder Verstopfungen der sehr kleinen Öffnungen durch die in den aufzutragenden Substanzen enthaltenden Partikel kommt, so dass keine ausreichende Qualität und Reproduzierbarkeit mit den herkömmlichen Druckverfahren realisiert werden kann. Bei anderen Verfahren, bei denen eine Mikrospritze oder andere bekannte Mikrodosierverfahren verwendet werden, werden die Düsen bzw. die sehr kleinen Kapillaren usw. häufig durch die Partikel verstopft, so dass auch mit diesen Verfahren keine ausreichende Qualität erreichbar ist. Ganz besonders schwierig stellt sich die Anbringung der Abstandhalter für solche Fälle dar, bei denen die Abstandhalter auf beiden Oberflächen der Glasplatten positionsgenau anzubringen sind.

Ein weiterer Nachteil ist, dass bei den herkömmlichen Verfahren sowohl für die Bereitstellung als auch das Aufbringen der Abstandhalter auf den Glasplatten sehr komplizierte und aufwändige Vorrichtungen bzw. Apparate nötig sind, so dass eine Massenproduktion stets mit hohen Kosten verbunden ist.

### Aufgabe der Erfindung

Der Erfindung liegt die Aufgabe zugrunde, ein verbessertes wärmedämmendes Verglasungselement bereitzustellen, mit dem Nachteile der herkömmlichen Techniken überwunden werden. Die Aufgabe der Erfindung ist es des Weiteren, verbesserte Verfahren zur Herstellung des Verglasungselementes bereitzustellen, mit denen Nachteile der herkömmlichen Verfahren überwunden werden und die insbesondere kostengünstig und zuverlässig realisiert werden können.

### Zusammenfassung der Erfindung

Diese Aufgaben werden mit einem Verglasungselement, einem Verfahren zur Herstellung einer mit Abstandhaltern versehenen Glasplatte und einem Verfahren zur Herstellung eines wärmedämmenden Verglasungselements mit den Merkmalen der unabhängigen Ansprüche gelöst. Vorteilhafte Ausführungsformen und Anwendungen der Erfindung ergeben sich aus den abhängigen Ansprüchen.

Gemäß einem ersten Aspekt wird die o. g. Aufgabe durch ein wärmedämmendes Verglasungselement gelöst, das eine Glasplatten-Anordnung mit mindestens zwei Glasplatten mit mindestens einem evakuierbaren Zwischenraum, eine Randabdichtungseinrichtung, die zur Abdichtung mindestens eines Zwischenraums gegenüber einer Umgebung mit einem Randabdichtungsmaterial eingerichtet ist, und eine Abstandhaltereinrichtung umfasst, die zur Einstellung der Abstände der Glasplatten eingerichtet ist und Abstandhalter aufweist, die ein Glaslot oder eine Glasfritte und mindestens eine Kristallisationssubstanz enthalten, die geeignet ist, im Glaslot oder in der Glasfritte Kristallisationskeime zu bilden und/oder die Bildung von Kristallisationskeimen zu fördern und/oder die Bildung von kristallinen Phasen zu fördern.

Das Verglasungselement bildet allgemein ein Fenster, das zum Einbau in einer Wand vorgesehen ist, die einen Innenraum von einem Außenraum trennt. Die Innen- und Außenräume sind in Abhängigkeit von der Anwendung des Verglasungselements gebildet. Typischerweise umfasst der Innenraum das Innere eines Bauwerks, einer technischen Anlage oder eines Transportmittels, während der Außenraum durch deren Umgebung gebildet wird. Das Verglasungselement weist vorzugsweise eine vorbestimmte Einbaurichtung auf. Eine Außenseite des Verglasungselements ist dazu eingerichtet, zum Außenraum zu weisen, während eine Innenseite des Verglasungselements dazu eingerichtet ist, zum Innenraum zu weisen. Die Einbaurichtung des Verglasungselements kann zum Beispiel durch eine Hauptrichtung maximaler Belastbarkeit oder durch Eigenschaften eines Rahmens des Verglasungselements gebildet werden.

Gemäß einem zweiten Aspekt wird die o. g. Aufgabe durch ein Verfahren zur Herstellung einer mit Abstandhaltern versehenen Glasplatte gelöst, bei dem die Abstandhalterpartikel auf einer ersten Glasoberfläche aufgebracht und die Abstandhalter durch eine Wärmebehandlung der Abstandhalterpartikel, umfassend ein Aufschmelzen, eine Kristallisation und eine Ausbildung der Abstandhaltergeometrie auf der Glasoberfläche gebildet werden. Vorteilhafterweise wird somit ein kostengünstiges Verfahren zum hochpräzisen Aufbringen sowie auch zum Befestigen der Abstandhalter auf den Glasplattenoberflächen bereitgestellt. Das Verfahren kann so durchgeführt werden, dass damit beidseitig mit Abstandhalter versehene Glasplatten herstellbar sind.

Mit dem Begriff "Abstandhalter" werden hier die Elemente bezeichnet, die zur Einstellung eines Zwischenraums zwischen den Glasplatten angeordnet sind. Mit dem Begriff "Abstandhalterpartikel" werden vorgeformte Partikel (Rohlinge) bezeichnet, aus denen die Abstandhalter hergestellt werden.

Gemäß einem dritten Aspekt wird die o. g. Aufgabe durch ein Verfahren zur Herstellung des wärmedämmenden Verglasungselements gemäß dem ersten Aspekt gelöst, wobei das Verglasungselement durch Anlegen eines Unterdruckes an eine Evakuierungsöffnung evakuiert und die Evakuierungsöffnung verschlossen wird.

Dabei sind vorzugsweise die Schritte Anbringen eines Evakuierüngsrohres, Auftragen von Randversiegelungs- und/oder Dichtungsmaterialien, und Aufschmelzen der Randversiegelungs- und/oder Dichtungsmaterialien zur druckdichten Versiegelung am Rand des Verglasungselementes und am Evakuierungsrohr bei Temperaturen zwischen 200°C und 540°C vorgesehen, wobei anschließend die Evakuierung der Verglasungselemente bei erhöhten Temperaturen bis zu einem Enddruck im Bereich von 10⁻¹ Pa bis 10⁻³ Pa oder darunter erfolgt, und das druckdichte Verschließen des Evakuierungsrohres bei einer Temperatur im Bereich zwischen 80°C und 380°C, vorzugsweise zwischen 80°C und 280°C erfolgt, und eine Abkühlung der Verglasungselemente auf Raumtemperatur vorgesehen ist.

Weitere bevorzugte Merkmale der Erfindung und deren Vorteile werden unten bei der Beschreibung bevorzugter Ausführungsformen der Erfindung erläutert.

Wie sich bei der Herstellung der wärmedämmenden Verglasungselemente sowie den an diesen durchgeführten Praxistests gezeigt hat, weisen die erfindungsgemäß verwendeten Abstandhalter zahlreiche Vorteile auf, durch die insbesondere die folgenden Anforderungen an die Abstandhalter und die Verglasungselemente erfüllt werden.

Eine erste Anforderung besteht darin, dass die Kontaktflächen zwischen den Abstandhaltern und den Glasplattenoberflächen so ausgelegt sein können, dass die von außen einwirkenden Kräfte gleichmäßig aufgenommen und verteilt werden können. Bei zu kleinen oder nahezu nur punktförmig vorhandenen Kontaktflächen kommt es mitunter schon bei kleinen Scherkräften häufig zu Rissen, Ausbrüchen oder anderen Beschädigungen. Die Kontaktflächen können jedoch auch nicht zu groß gewählt werden, da ansonsten sowohl die Wärmedämmwerte als auch die Ästhetik und das Design der Verglasungselemente in starkem Maße beeinträchtigt werden.

Entsprechend einer zweiten Anforderung können die Abstandhalter zur Aufnahme der hohen mechanischen Lasten eine ausreichende Eigenfestigkeit bzw. -stabilität besitzen, die möglichst homogen, das heißt gleichmäßig über deren gesamtes Volumen hinweg vorliegt. Daraus ergeben sich Anforderungen an die für die Abstandhalter einzusetzenden Materialien sowie deren mikrostrukturelle Eigenschaften.

Entsprechend einer dritten Anforderung können die Kontaktflächen zwischen den Abstandhaltern und den Glasplattenoberflächen so vorgesehen sein, dass sich weder beim Erwärmen der Verglasungselemente auf mitunter hohe Temperaturen (z. B. bis etwa 540°C) noch bei Abkühlprozessen, stabilitätsmindernde thermomechanische Spannungen und dadurch Beschädigungen und Zerstörungen der Verglasungselemente ausbilden können.

Eine vierte Anforderung besteht darin, dass die Kontaktflächen zwischen den Abstandhaltern und den Glasplattenoberflächen so vorgesehen werden können, dass es aufgrund der im praktischen Gebrauch auftretenden Hin-und-Her-Bewegungen der Glasplatten nicht zu irreversiblen Beschädigungen der Glasplattenoberflächen, z. B. in Form von mikroskopisch kleinen Kratzern, Rillen, Furchen oder dergleichen, mit das Verglasungselement zerstörender Wirkung kommt. Die Form sowie die Abmessungen der Abstandhalter spielen dabei eine ganz besondere Rolle.

Entsprechend einer fünften Anforderung können für die Massenfertigung der Abstandhalter geeignete Verfahren verwendet werden, welche die anderen, an die Abstandhalter zu stellenden Anforderungen berücksichtigen und bei denen die Nachteile der herkömmlichen Verfahren überwunden werden.

Das erfindungsgemäße Verglasungselement ist vor allem dort von wirtschaftlicher Bedeutung, wo wärmeisolierende Eigenschaften, ggf. auch in Kombination mit niedrigem Gewicht und/oder verringerter Einbautiefe und/oder Schallschutz und/oder Sicherheit und/oder Brandschutz und/oder elektromagnetischen Schutzeinrichtungen usw. gefragt sind. So kann das Bauteil in verschiedenen Bereichen verwendet werden, wie zum Beispiel in der Bauindustrie als Teil eines Gebäudes (z. B. Verglasungen, Glasdächer, Glaswände, Abschirmungen, Heizelemente), als Teil eines Transportmittels (z. B. Autos, Schiffe, Flugkörper, Bahnfahrzeuge), als Teil von Transport- oder Lagereinrichtungen (z. B. für kühlende bzw. heizende oder zu kühlende bzw. zu heizende Gegenstände), als Teil von Sicherheitssystemen oder -einrichtungen (z. B. für Brandschutz, Schallschutz, Einbruch-, Beschuss- und Explosionssicherheit, elektromagnetische Abschirmung usw.), oder als Teil einer technischen Anlage, z. B. Maschine, Gerät, Gebrauchsgegenstand (z. B. Kühlaggregate wie Kühlschränke und -truhen, Sonnenkollektoren, Heizeinrichtungen, Hitzeschilder), oder einer Eich-, Mess- oder Prüfeinrichtung. Die mit den erfindungsgemäßen Abstandhaltern bzw. Distanzierungseinrichtungen versehenen Glasoberflächen sind auch als Bestandteil von elektronischen, optoelektronischen Bauteilen usw. wie z. B. Displays oder Anzeigen, Sensoren usw. verwendbar.

### Kurzbeschreibung der Zeichnungen

Weitere Einzelheiten und Vorteile der Erfindung werden im Folgenden unter Bezug auf die beigefügten Zeichnungen beschrieben. Es zeigen:
- Figur 1:: Schnittdarstellungen von Ausführungsformen erfin- dungsgemäßer Verglasungselemente;
- Figur 2:: Illustrationen der Formung der erfindungsgemäß ver- wendeten Abstandshalter;
- Figur 3:: Illustrationen der erfindungsgemäßen Aufbringung von Abstandshalterpartikeln;
- Figur 4:: Illustrationen von Verfahrenschritten bei der Her- stellung erfindungsgemäßer Verglasungselemente; und
- Figur 5:: weitere Einzelheiten der Bereitstellung von Ab- standshaltern an erfindungsgemäßen Verglasungsele- menten.

### Bevorzugte Ausführungsformen der Erfindung

Ausführungsformen von erfindungsgemäßen Verglasungselementen und Verfahren zu deren Herstellung werden im folgenden unter beispielhaftem Bezug auf Verglasungselemente beschrieben, wie sie in den am Anmeldetag der vorliegenden Erfindung unveröffentlichten deutschen Patentanmeldungen Nr. 10 2006 061 360.0 und Nr. 10 2007 030 031.1 beschrieben sind, deren Inhalt in Bezug auf die Eigenschaften, insbesondere die Bestandteile, den Aufbau, die solaren Absorptionseigenschaften und die Einrichtungen zur Vakuumerzeugung bzw. -abdichtung der Verglasungselemente in die vorliegende Beschreibung durch Bezugnahme eingeführt wird. Die Umsetzung der Erfindung ist jedoch nicht auf diese Verglasungselemente beschränkt, sondern analog mit Verglasungselementen realisierbar, die insbesondere in Bezug auf die Anordnung, Form, Größe und Materialien der Glasplatten, der Abstandhalter und der Randabdichtung einen anderen Aufbau aufweisen.

Es wird betont, dass die beigefügten Zeichnungen schematische Bilder von Ausschnitten der Verglasungselemente zeigen. Bei der Umsetzung der Erfindung können insbesondere geometrische oder mechanische Eigenschaften der Verglasungselemente in Abhängigkeit von den konkreten Bedingungen anders gebildet sein, als dies gezeigt ist. So erlaubt das erfindungsgemäße Verglasungselement z. B. nicht nur ebene Konstruktionen in frei wählbaren Formen und Formaten, sondern insbesondere auch gebogene oder gekrümmte Konstruktionen. Die Erfindung wird vorzugsweise mit einem Verglasungselement mit mindestens drei Glasplatten realisiert, kann aber auch mit Vakuum-Isoliergläser angewendet werden, deren Glasplatten-Anordnung aus zwei Glasplatten besteht.

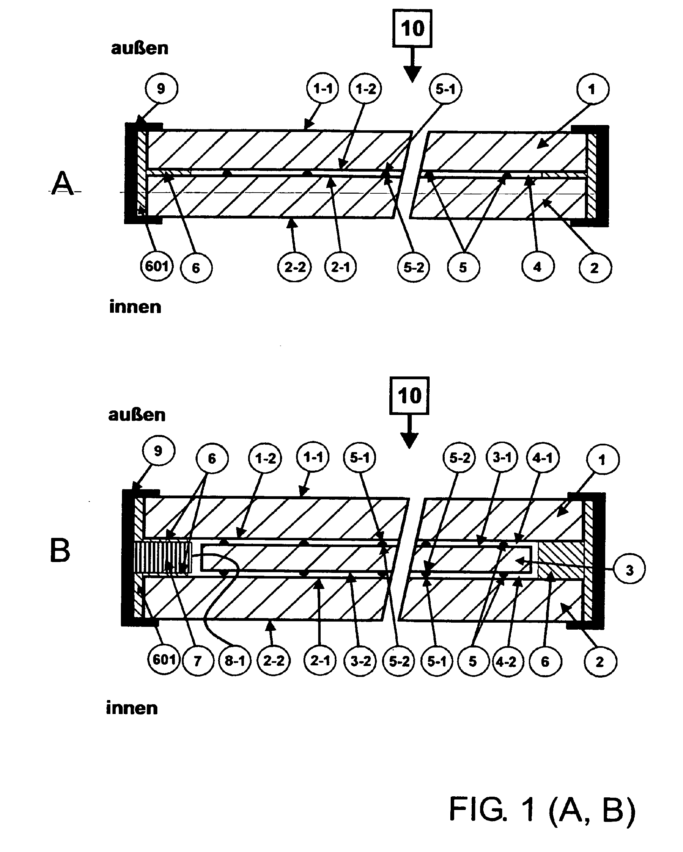

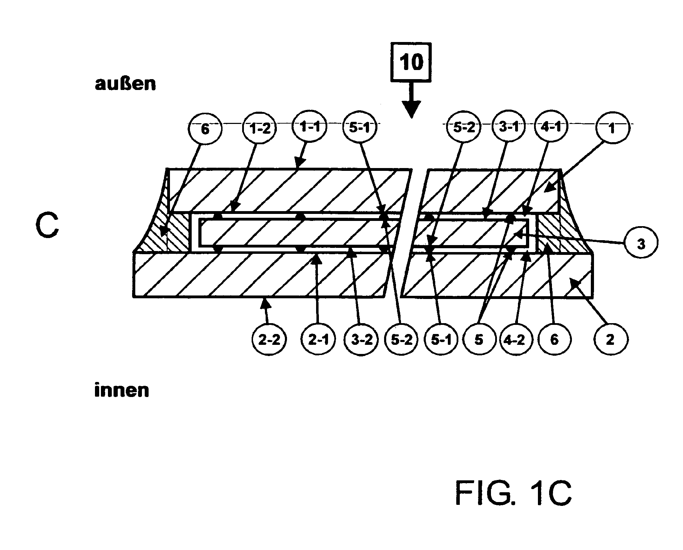

Die Figuren 1A bis 1C zeigen Varianten des Verglasungselements 10 mit einer Glasplatten-Anordnung, die aus zwei oder drei Glasplatten 1, 2, 3 aufgebaut ist. Im Einzelnen umfasst das Verglasungselement 10 gemäß Figur 1A eine Glasplatten-Anordnung mit einer ersten, nach außen gerichteten Glasplatte 1 und einer zweiten, nach innen gerichteten Glasplatte 2. Gemäß den Figuren 1B und 1C ist eine dritte, zwischen den Glasplatten 1, 2 angeordnete, innere Glasplatte 3 vorgesehen. Die Glasplatten weisen jeweils entsprechend innen angeordnete Oberflächen 1-2, 3-1, 3-2 und 2-1 auf. Zwischen den Glasplatten 1, 2, und 3 sind evakuierbare Zwischenräume 4, 4-1 und 4-2 gebildet.

Des Weiteren umfasst das Verglasungselement 10 eine Randabdichtungseinrichtung 6, 601, die zur Abdichtung der Zwischenräume 4, 4-1 und 4-2 zwischen den Glasplatten gegenüber einer Umgebung des Verglasungselements mit einem Randabdichtungsmaterial eingerichtet und mit einem Rahmen 9 (Figuren 1A, 1B) eingefasst ist. Durch die Randabdichtungseinrichtung 6 führt zwischen zwei der Glasplatten (z. B. Glasplatten 1, 2 siehe Figur 1B) ein seitliches Evakuierungsrohr 7, in dem ein Dichtelement 8-1 angeordnet ist. Alternativ ist die Evakuierung durch mindestens eine Öffnung vorgesehen, die an mindestens einer der nach außen angeordneten Scheibenoberflächen der Glasplatten angeordnet ist. In Figur 1C ist eine Variante des Verglasungselements dargestellt, bei der die Glasplatten 1, 2 verschiedene Größen aufweisen und das Randabdichtungsmaterial 6 zur Überbrückung des Größenunterschieds der Glasplatten 1, 2 vorgesehen ist.

Des Weiteren umfasst das Verglasungselement 10 eine Abstandhaltereinrichtung 5, die zur Einstellung der Abstände der Glasplatten 1, 2, 3 eingerichtet ist und Abstandhalter 5 umfasst. In den Illustrationen ist z. B. vorgesehen, dass die zwischen den äußeren und inneren Glasplatten 1, 2 angeordnete dritte Glasplatte 3 beidseitig mit festen Abstandhaltern versehen ist.

Die Abstandhalter 5 umfassen ein Material, insbesondere ein glasartiges Material, welches vorteilhafterweise die gleichen oder zumindest ähnliche Eigenschaften wie die Glasplatten 1, 2, 3 besitzt. Vorteilhafterweise weist das die Abstandhalter bildende Material gegenüber den Glasplatten annähernd die gleiche oder eine etwas verringerte Härte sowie mindestens annähernd den gleichen oder einen etwas verringerten Reibungskoeffizienten auf, damit der durch die Hin-und-Her-Bewegungen der Glasplatten hervorgerufene Abrieb und die damit verbundenen Beschädigungen an den Glasplattenoberflächen weitestgehend vermieden werden können. Ferner ist von Vorteil, dass durch die Abstandhalter nur eine geringe Wärmeleitung erfolgt.

Vorzugsweise werden glasartige Materialien verwendet, die Glaslote oder Glasfritten oder diese Stoffe enthaltende Substanzen umfassen. Unter einem Glaslot versteht man ein gefrittetes Glas, das durch Wärmezufuhr schon bei niedrigeren Temperaturen (z. B. T < 700°C) schmilzt. Eine besondere Bedeutung besitzen die kristallisierenden Glaslote, die während des Schmelzvorganges von einem glasigen in einen glasigkristallinen Zustand übergehen, wobei schon in der Schmelze eine mindestens teilweise irreversible Verfestigung des Glaslotes erfolgt.

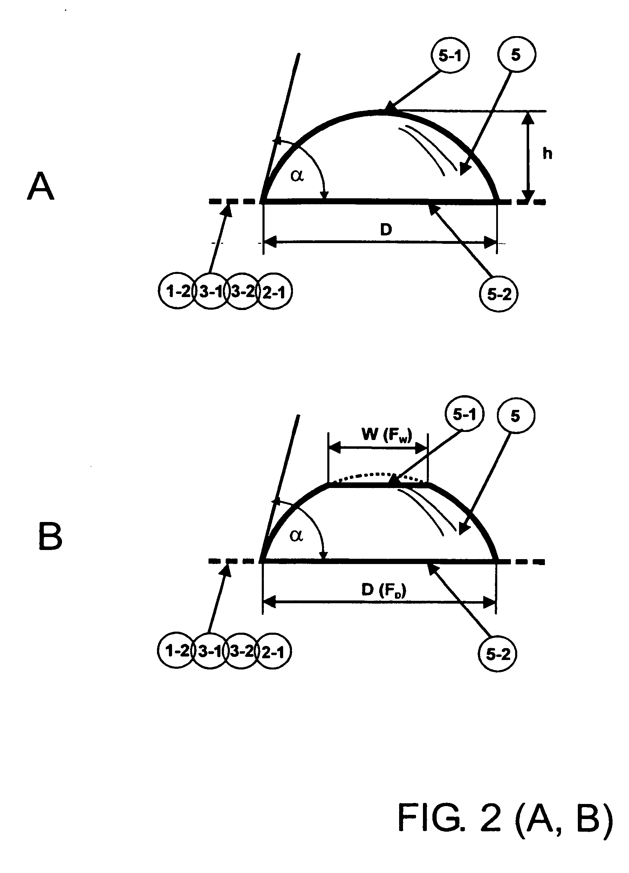

Die bekannten Glaslote sind jedoch für die Bildung der erfindungsgemäßen Abstandhaltergeometrien ungeeignet. Wie sich bei Experimenten gezeigt hat, kommt es beim Aufschmelzen der bekannten Glaslote dazu, dass die Glaslote auf den Glasplattenoberflächen glatt fließen und sich keine bestimmten Abstandhaltergeometrien einstellen lassen. Dieses Glattfließen ist auf die glasartige Natur der Glaslote und der damit verbundenen sehr guten Benetzbarkeit von gleichen oder ähnlichen Stoffen, wie es bei den aus Glas bestehenden Platten 1, 2, 3 der Fall ist, zurückzuführen. Mit den bekannten Glasloten und den herkömmlichen Verfahren lassen sich deshalb nur kleine, ungenügende Tangentialwinkel von typischerweise nur etwa 50° und darunter erhalten (siehe Figur 2).

Es ist zwar bekannt, dass durch die Zumischung von speziellen Oxiden die Oberflächenspannung bzw. die Benetzbarkeit von Gläsern in gewissen Grenzen beeinflusst werden kann. So lässt sich zum Beispiel durch Zugabe von Al₂O₃, MgO, CaO usw. die Oberflächenspannung erhöhen, während die Komponenten B₂O₃, K₂O, PbO usw. zu einer Verringerung der Oberflächenspannung führen. Jedoch hat sich gezeigt, dass alleine die Zumischung solcher Substanzen nicht ausreicht, um die besonders bevorzugten Abstandhaltergeometrien und die damit verbundenen hohen Oberflächenspannungen zu erhalten. Außerdem zeigt sich, dass bei einer zu großen Zugabe von Zusatzstoffen, die mechanische Festigkeit der Abstandhalter deutlich beeinträchtigt wird. Es ist zwar ferner bekannt, dass durch eine Benetzung der Oberflächen der Glasplatten durch geeignete Beschichtungen ein Glattfließen von Glasloten vermindert werden könnte, jedoch sind solche Verfahren mit zu hohen Kosten, unerwünschten Qualitätsproblemen usw. behaftet.

Wie überraschenderweise herausgefunden wurde, lässt sich die bevorzugte Abstandhaltergeometrie nur dann erhalten, wenn die folgende Bedingung erfüllt ist. Die Bedingung besteht darin, dass die Abstandhalter aus einem Material gebildet werden, das in ganz besonders vorteilhafter Weise durch eine kontrollierte Kristallisation mittels Wärmebehandlung verfestigt werden kann. Hierzu enthalten die Abstandhalter mindestens eine Kristallisationssubstanz, die geeignet ist, im Glaslot oder in der Glasfritte Kristallisationskeime zu bilden und/oder die Bildung von Kristallisationskeimen zu fördern und/oder die Bildung von kristallinen Phasen zu fördern.

Vorzugsweise enthält das Ausgangsmaterial, aus dem die Abstandhalter 5 gebildet sind mindestens eine erste Materialkomponente, die ein kristallisierendes Glaslot umfasst, und mindestens eine zweite Materialkomponente, die ein das Kristallisationsverhalten des Glaslotes beeinflussende Substanz enthält. Die chemische Zusammensetzung des kristallisierenden Glaslotes wird so gewählt, dass das Aufschmelzen des Glaslotes bei Temperaturen von kleiner als oder gleich der Transformationstemperatur der Glasplatte, auf der die Abstandhalter fest anzubringen sind, erfolgt. Bei Verwendung von Glasplatten aus Kalk-Natron-Glas werden solche kristallisierenden Glaslote verwendet, die bei Temperaturen von kleiner als oder gleich 550°C, vorzugsweise unterhalb etwa 530°C verarbeitet werden können. Derartige bekannte, bei niedrigeren Temperaturen kristallisierende Glaslote sind bleihaltige Glaslote wie zum Beispiel Blei-Zink-Borosilikatglas, Blei-Zink-Silikatglas, Blei-Alumo-Borosilikatglas usw., oder bleifreie Glaslote wie zum Beispiel Zink-Phosphatglas, Zinn-Zink-Phosphatglas oder Alkali-Borosilikatglas mit Anteilen von Zink und/oder Wismut usw., oder aber auch Gemische dieser Substanzen. Die Glaslote können auch mit weiteren, an sich bekannten Zusatz- oder Füllerkomponenten, wie zum Beispiel mit ZnO oder Barium-Borosilikatglas usw., versehen sein.

Von Vorteil kann es ferner sein, wenn die Abstandhalter bleihaltiges und/oder wismuthaltiges Glaslot mit einem Bleioxid- bzw. Wismutoxidgehalt von mindestens 15 Gewichtsprozent, vorzugsweise größer als oder gleich 25 Gewichtsprozent enthalten. Die bleioxid- und/oder wismutoxidhaltigen Glaslote erlauben zudem nicht nur eine gute Anpassung der thermischen Ausdehnung der Abstandhalter 5, 501, 502 an die Glasplatten 1, 2, 3 sowie auch deutlich niedrigere Temperaturen bei der Herstellung. Vielmehr hat sich gezeigt, dass auf Grund ihrer verringerten Wärmeleitfähigkeit vor allem die Wärmeleitungsverluste in den Verglasungselementen noch weiter reduziert werden können. Dadurch lassen sich einerseits noch bessere Wärmedämmwerte der Verglasungselemente erhalten und andererseits sogar die unerwünschten, lokal auftretenden Kondensationserscheinungen weiter verringern. Wie sich in den Untersuchungen gezeigt hat, kann durch die Verwendung von bleioxid- und/oder wismutoxidhaltigen Glaslote sogar die Festigkeit und Langzeitstabilität der Verglasungselemente noch weiter verbessert werden. Es wird davon ausgegangen, dass dies auf die deutlich geringeren lokal wirksamen thermomechanischen Spannungen an den Kontaktstellen Abstandhalter-Glasplatte oder deren unmittelbarer Umgebung und/oder auf die besonders geeigneten mechanischen Eigenschaften (siehe Härte und Festigkeit, Reibung, Haftvermögen usw.) dieser Glaslote zurückzuführen ist.

Wie sich gezeigt hat, lassen sich besonders stabile Verglasungselemente 10 erhalten, wenn in den Abstandhaltern ein möglichst hoher kristalliner Glaslotanteil enthalten ist. Die Zusammensetzung der Ausgangsmaterialien sowie die Herstellungsparameter sind deshalb so zu wählen, dass die kristallinen Glasphasen einen Volumenanteil von mindestens 70%, vorzugsweise größer als oder gleich 80% besitzen. Der Anteil der nichtkristallinen Glasmatrix im fertig hergestellten Abstandhalter sollte kleiner als 10 Gew.%, vorzugsweise kleiner als oder gleich etwa 6 Gew.% sein, damit die Abstandhalter während der Produktion der Verglasungselemente an der Kontaktfläche 5-1 nicht mit den Glasplatten 1, 2, 3 verkleben.

Bei der Herstellung der erfindungsgemäßen Verglasungselemente empfiehlt es sich, die Schmelz-/Kristallisationstemperatur für die Abstandhalter stets größer als oder etwa gleich der Temperatur, bei der die Randversiegelung des Verglasungselementes durchgeführt wird, zu wählen.

Zur Beeinflussung des Kristallisationsverhaltens können dem mindestens ein kristallisierendes Glaslot umfassenden Ausgangsmaterial zusätzliche Stoffe beigemischt werden. Hierzu lassen sich z. B. Metalle wie Au, Ag, Cu usw. oder Gläser verwenden, die sich bei der Wärmebehandlung des Glaslotes in der Schmelze lösen und somit optimal in die Struktur einbauen lassen. Als ganz besonders vorteilhaft zur Ausbildung der bevorzugten Abstandhaltergeometrie erwies sich die Zugabe von mindestens einem hochschmelzenden keramisch Material, das bei den realisierten Prozesstemperaturen nicht oder nicht vollständig in der Schmelze gelöst wird (unlöslich oder nur schwer löslich). Hierbei werden vorzugsweise solche keramischen Materialien verwendet, die mindestens teilweise die Elemente Zirkon und/oder Titan umfassen, wie zum Beispiel Zirkonsilikat, Zirkonoxid, Titanoxid, Titanate (z. B. Bleititanat) oder Gemische aus diesen oder andere geeignete Kristallisationskeime bildende und/oder die Bildung von Kristallisationskeimen fördernde Substanzen. Die Konzentration dieser Materialien wird vorzugsweise auf Werte zwischen etwa 0,5 Gew.% und zirka 20 Gew.% eingestellt. Zur gezielten Beeinflussung des Kristallisationsverhaltens kann auch mindestens eine die Beweglichkeit erhöhende Substanz wie Alkali- bzw. Erdalkalifluoride (z. B. NaF, KF, CaF₂, MgF₂ usw.) verwendet werden. Das Kristallisationsverhalten kann aber auch durch die Anreduktion des Glaslotmaterials erfolgen, wobei als reduzierende Substanzen vorzugsweise Eisen(II)- oder Zinn(II)-Verbindungen vorgesehen sind.

Zur weiteren Optimierung des Kristallisationsverhaltens lassen sich auch andere bekannte Verfahren und/oder andere Konzentrationsbereiche nutzen.

Der Ausdehnungskoeffizient des die Abstandhalter bildenden Materials wird vorteilhafterweise mindestens etwa in der Nähe desjenigen der Glasplatte, mit der die Abstandhalter 5 fest verbunden sind, gewählt, damit der Gefahr eines Bruches, der Bildung von Rissen oder Abplatzungen usw. an der starren Kontaktfläche 5-2 infolge von thermomechanischen Spannungen noch besser begegnet wird. Zur genauen Einstellung des Ausdehnungskoeffizienten der Abstandhalter können verschiedene bekannte glasartige und/oder keramische Substanzen zugemischt werden. Wie aus den Untersuchungen des Erfinders hervorgeht, sollte die zulässige Differenz zwischen den Ausdehnungskoeffizienten der Abstandhalter 5 und der Glasplatten, mit denen die feste Verbindung hergestellt wird, im Temperaturbereich zwischen 20°C und etwa 300°C vorzugsweise auf Werte von etwa kleiner als oder gleich ± 5·10⁻⁶ K⁻¹, besonders bevorzugt kleiner als oder gleich zirka ± 3·10⁻⁶ K⁻¹, eingestellt werden.

Dem Ausgangsmaterial für die Abstandhalter können weitere Zusätze zugesetzt sein, um bestehende Eigenschaften bzw. Funktionen zu verbessern oder aber auch noch weitere Eigenschaften zusätzlich zu erhalten. So lässt sich die Mikrowellenabsorption dadurch erhöhen, dass spezielle Substanzen, wie Keramiken (z. B. SiC usw.) und/oder Metalle (z. B. A1, Cu, Mg usw.) und/oder deren Verbindungen bzw. Kombinationen aus diesen, mit einer Konzentration von kleiner als 15%, vorzugsweise zwischen etwa 1% und etwa 10%, zugesetzt werden.

Bei dem in Figur 1A schematisch dargestellten, aus zwei Glasplatten 1, 2 gebildeten wärmedämmenden Verglasungselement 10 ist mindestens eine der innen liegenden Oberflächen mit den erfindungsgemäßen Abstandhaltern 5 mindestens teilweise versehen. Als ganz besonders vorteilhaft hat sich herausgestellt, wenn die Abstandhalter 5 an einer ersten Kontaktfläche 5-2 fest bzw. starr mit den Glasoberflächen verbunden sind und an einer zweiten, direkt gegenüberliegenden Kontaktfläche 5-1 frei beweglich ausgelegt sind, so dass dort ein Gleiten auf der Glasoberfläche möglich ist. Die Abstandhalter 5 sind in Figur 1A beispielhaft auf einer ersten Seite in der Kontaktfläche 5-2 fest mit der Glasoberfläche 2-1 verbunden, während die gegenüberliegende, zweite Seite so beschaffen ist, dass sich die darüber liegende Glasplatte 1 im Bereich der zweiten Kontaktfläche 5-1 nahezu frei bewegen kann. Die Befestigung der Abstandhalter 5 kann jedoch auch in umgekehrter Weise an der Glasoberfläche 1-2 erfolgen.

In den Figuren 1B und 1C sind im seitlichen Schnitt Verglasungselemente dargestellt, die aus drei Glasplatten zusammengesetzt sind, wobei die Abstandhalter 5 in den Kontaktflächen 5-2 fest auf den Glasplattenoberflächen 3-1 und 3-2 angebracht sind. Die Abstandhalter lassen sich aber auch auf den anderen Glasplattenoberflächen 1-2, 2-1 in verschiedenen Kombinationen aufbringen.

Durch umfangreiche Experimente hat der Erfinder herausgefunden, dass eine besonders gute mechanische und thermomechanische Stabilität der Verglasungselemente 10 erhalten werden kann, wenn die Abstandhalter 5 eine asymmetrische Geometrie aufweisen, wie im Folgenden unter Bezug auf Figur 2 erläutert wird.

In Figur 2 sind besonders bevorzugte Abstandhaltergeometrien im seitlichen Schnitt dargestellt. Gegenüber den bekannten Geometrien wie z. B. Kugeln, Zylindern usw. zeichnen sich Abstandhalter mit den bevorzugten Abstandhaltergeometrien durch eine erste, flach gebildete Seite, die über die Kontaktfläche 5-2 fest mit mindestens einer der Glasplattenoberflächen 1-2, 3-1, 3-2, 2-1 verbunden ist, und eine zweite Seite, die ähnlich der Geometrie eines Kugelabschnittes (Figur 2A) oder einer Kugelschicht (Figur 2B) gebildet ist und bei der die an den Kontaktflächen 5-1 angrenzenden Glasplatten 1, 2, 3 frei beweglich sind. Die durch eine Abflachung der Kegelabschnittgeometrie sphärisch oder ähnlich geformte Kontaktfläche 5-1 mit einem charakteristischen Durchmesser W (siehe Kugelschicht entspr. Figur 2B) ist dabei vorzugsweise parallel, zumindest aber nahezu parallel zur Kontaktfläche 5-2 gebildet.

Als besonders vorteilhaft hat sich erwiesen, wenn für das Verhältnis F_{W}:F_{D} zwischen der Fläche der Kontaktfläche 5-1 und der Fläche der Kontaktfläche 5-2 ein Wert von höchstens etwa 0,75, vorzugsweise kleiner als oder gleich etwa 0,70 eingestellt wird. Besonders gute und reproduzierbare Ergebnisse wurden bei den bevorzugten Abstandhaltern mit einer Kugelschichtgeometrie für F_{W}:F_{D}-Flächenverhältnisse im Bereich zwischen etwa 0,08 und etwa 0,65 erhalten.

Da sich vor allem stets die nach außen gerichtete Glasplatte 1 unter dem Einfluss von z. B. Temperaturschwankungen, Winddruck bzw. Windsog usw. besonders stark ausdehnt, zusammenzieht oder deformiert, hat es sich für die Stabilität der Verglasungselemente 10 als besonders vorteilhaft erwiesen, wenn die Abstandhalter 5 so eingerichtet sind, dass die als Kugelabschnitt und/oder Kugelschicht ausgebildete Kontaktfläche 5-1 der Abstandhalter mindestens im Zwischenraum 4, 4-1 nach außen hin, d. h. zur Außenseite des Verglasungselements ausgerichtet ist.

Der Erfinder hat weiterhin Vorteile festgestellt, wenn für die Tangentialwinkel α der Abstandhalter 5 ein Wert im Bereich von etwa 55° bis etwa 90°, vorzugsweise zwischen zirka 65° und zirka 90° vorgesehen wird (siehe Figur 2). Bei größeren Tangentialwinkeln von etwa 100° und darüber ist die Krümmung an den Kontaktflächen 5-1 so stark ausgeprägt, dass es durch Einkerbungen oder Eindrücke sehr schnell zu den kritischen mikroskopischen Beschädigungen an den darauf lose aufliegenden Glasplattenoberflächen und damit zu einer Beschädigung der Verglasungselemente 10 kommen kann. Wird der Tangentialwinkel wiederum zu klein gewählt (ca. 55° und darunter), können z. B. die jeweils gegenüberliegenden Glasplatten nicht genügend beabstandet werden, um die Evakuierung der dazwischen befindlichen Volumina optimal durchführen zu können. Außerdem bilden sich bei einer zu großen Kontaktfläche 5-1 sehr große Reibungsflächen aus, die wiederum zu einem Ansteigen der Anzahl der mikroskopischen Beschädigungen an den Glasoberflächen führen.

Der Durchmesser D der starren Kontaktfläche 5-2 der besonders bevorzugten Abstandhaltergeometrien wird dabei im Bereich zwischen etwa 100 µm und etwa 1000 µm, vorzugsweise zwischen etwa 150 µm und etwa 800 µm eingerichtet.

Durch die erfindungsgemäße Abstandhaltergeometrie und deren Anordnung im Verglasungselement lassen sich die infolge der Reibung und/oder der lokalen Schädigungen der Glasoberflächen hervorgerufenen Nachteile bei den herkömmlichen Vakuum-Isolierverglasungen überwinden. Dadurch, dass nun einerseits an der Position 5-2 eine ausreichend große, gleichmäßige und feste Kontaktfläche vorhanden ist, können die von außen auf das Verglasungselement 10 einwirkenden Druck- und Scherkräfte besonders gut auf die Glasplatten übertragen und dort verteilt werden. Auf der anderen Seite ist es durch die bevorzugten Abstandhalter auch im Kontaktbereich 5-1 möglich geworden, dass sich an den dort angrenzenden Glasoberflächen, weder durch die lokal auf die Glasplattenoberflächen einwirkenden Druckkräfte (Normalkräfte) noch durch die Hin-und-Her-Bewegung (Scherkräfte), die das Verglasungselement zerstörenden oder dessen Lebensdauer einschränkenden mechanischen Beschädigungen mehr ausbilden können.

Zur Herstellung der Abstandhalterpartikel, aus denen die Anstandhalter gebildet werden, erfolgt zunächst die Bereitstellung der anorganischen Ausgangskomponenten in Pulverform. Anschließend werden die Ausgangskomponenten mit einem Lösungs- oder Dispergierungsmittel versehen, das z. B. Wasser oder andere organische Substanzen, wie insbesondere Alkohole, Toluen, Benzen, Terpentinöl, Polyethylenglykol usw., umfassen kann. Durch die Zugabe von organischen Bindemitteln und/oder Polymerisatoren lässt sich eine verbesserte Verklebung der pulvrigen anorganischen Ausgangskomponenten erreichen und die Viskosität der Pasten optimal für das Applizieren einstellen. Hierzu ist eine Reihe von bekannten Substanzen gut geeignet, wie zum Beispiel Nitratzellulose in Kombination mit Butyl- oder Amylacetat, Trimethylpentanediol-Monoisobutyrat in Kombination mit dem Polymerisator Isobutyl-Methakralat usw..

Das für die Abstandhalter aufbereitete Ausgangsmaterial kann anschließend gemäß einer Variante der Erfindung in Form einer Paste, einer Suspension oder dergleichen mittels herkömmlicher Druckverfahren oder durch bekannte Mikrodosiereinrichtungen lokal auf den Glasplattenoberflächen aufgebracht werden. Gemäß einer bevorzugten Variante der Erfindung werden die Abstandhalterpartikel als vorgefertigte Rohlinge aufgebracht (siehe unten).

Bei der anschließenden Wärmebehandlung werden zunächst ggf. organischen Komponenten wie Lösungsmittel, Bindemittel, Polymerisatoren usw. entfernt. Anschließend werden die niedrig schmelzenden Glaslotkomponenten aufgeschmolzen und zur Kristallisation gebracht. Zur Wärmebehandlung lassen sich herkömmliche Verfahren auf der Basis der Strahlungsheizung (UVbis IR-Bereich, Mikrowellenstrahlung, konzentriertes Laserlicht usw.), der Induktion, der Wärmekonvektion, sowie Kombinationen daraus (u. a. auch materialselektive Verfahren) oder andere bekannte Techniken verwenden. Es empfiehlt sich, die Schmelz-/Kristallisationstemperatur für die Abstandhalter stets größer als oder etwa gleich der Temperatur zu wählen, bei der die Randversiegelung des Verglasungselementes durchgeführt wird.

Als besonders vorteilhaft hat sich die Bereitstellung von vorgefertigten Rohlingen mit einer vorbestimmten Geometrie und Zusammensetzung erwiesen, aus denen die Abstandhalter durch Wärmebehandlung hergestellt werden. Es lassen sich auf diese Weise Abstandhalter bereitstellen, die neben der bevorzugten Geometrie entsprechend Figur 2 auch über eine ausreichende Druck- und Scherfestigkeit, eine geringe Wärmeleitfähigkeit sowie eine an die Glasplatten angepasste thermische Ausdehnung und Härte verfügen, so dass dadurch die dauerhafte und wärmeisolierende Beabstandung der Glasplatten 1, 2, 3 in den Verglasungselementen 10 sicherstellt wird. Dieses Ergebnis war nicht zu erwarten, weil eine Abhängigkeit der Abstandhaltergeometrie von der Zusammensetzung und der Form der Ausgangsmaterialien aus dem Stand der Technik nicht bekannt ist. Auf diese Weise ist es möglich, dem Glattfließen auf der Glasoberfläche erfolgreich entgegenzuwirken und die für die Abstandhalter geforderten geometrischen Abmessungen (siehe die Höhe h und die charakteristischen Durchmesser D, W in Figur 2) genau und reproduzierbar einzustellen.

Bei Verwendung von glaslothaltigen Substanzen kann die für die Abstandhalter bevorzugte Geometrie (siehe Figur 2) sowie die geforderten mechanischen Eigenschaften optimal in Bezug auf Qualität, Genauigkeit und Reproduzierbarkeit erhalten werden, wenn die auf den Glasoberflächen aufzubringenden Abstandhaltersubstanzen in Form von kompakten, geformten kugelförmigen oder zumindest kugelähnlichen Abstandhalterpartikeln bereitgestellt werden. Auf diese Weise konnten die glaslothaltigen Substanzen zur Herstellung der bevorzugten Abstandhaltergeometrien verbessert werden. Je besser die Abstandhalterpartikel zu einer Kugelgeometrie ausgebildet waren, desto größere Tangentialwinkel konnten erreicht werden. Diese Ergebnisse waren nicht zu erwarten und können nur dadurch erklärt werden, dass für die Ausbildung der bevorzugten Geometrie der Abstandhalter während der Wärmebehandlung verschiedenste komplexe Prozesse parallel und überlagernd wirksam sind. Dabei spielen geometrische Parameter (z. B. die anfänglich geringe Kontaktfläche der kugelförmigen Rohlinge auf den Glasoberflächen, die Masseverteilung in den Rohlingen, Einflußnahme der Volumenschrumpfungsprozesse usw.) und/oder Kristallwachstumsphänomene (z. B. homogenes oder inhomogenes Kristallwachstum, Kristallitgrößen, Einfluß der Art, Anzahl und Verteilung der Kristallwachstumskeime usw.) und/oder verfahrensbezogene Parameter (z. B. unterschiedliche Temperaturen zwischen den Abstandhalterpartikeln und den Glasplattenoberflächen, Temperaturverteilung innerhalb der Abstandhalterpartikel usw.) eine Rolle.

Die Abstandhalterpartikel lassen sich zum Beispiel so herstellen, indem die pulverisierten anorganischen Ausgangskomponenten zunächst mit den organischen Substanzen (siehe Lösungsmittel, Binder usw.) versetzt werden und anschließend die erhaltene pastöse Substanz in speziellen Press-, Spritz- bzw. Stanzverfahren oder dergleichen zu Rohlingen genau definierter Geometrie mechanisch geformt werden. Durch die anschließende Wärmebehandlung lassen sich dann die leicht flüchtigen Lösungsmittel aus den Presslingen entfernen und das zunächst noch etwas lockere Mikrogefüge verdichten. Die Rohlinge können aber auch vor dem eigentlichen Aufschmelzen/Kristallisieren durch einen Sinterprozess vorverdichtet werden.

Das die Abstandhalterpartikel bildende Ausgangsmaterial kann auch in Form einer Folie, eines Sandwiches oder dergleichen bereitgestellt werden, aus dem dann die kugelförmigen Rohlinge mittels mechanischer Bearbeitung bereitgestellt werden.

Als ganz besonders vorteilhaft erwies sich, wenn die einzelnen Materialkomponenten mittels eines Wirbelschichtverfahren zu einem Agglomerat oder Granulat mit definierter Zusammensetzung und Größe zusammengefügt werden. Überraschenderweise hat sich herausgestellt, dass sich vor allem die durch die Verfahren der Wirbelschicht-Sprühgranulation, -Agglomeration oder Kombinationen daraus bereitgestellten Rohlinge ganz besonders zur Herstellung der Abstandhalter eignen. Dieses Ergebnis war völlig unerwartet, weil die Synthese von derartigen kugelförmigen und dichten Rohlingen bestehend aus glaslothaltigen Substanzen, die zusätzlich mit weiteren Stoffen versehen sein können, mit diesen Wirbelschicht-Verfahren nicht bekannt ist. Die besondere Eignung der Wirbelschichtverfahren ist insbesondere darauf zurückzuführen, dass die mit diesen Verfahren hergestellten Rohlinge eine nahezu optimale kugelförmige, zumindest kugelähnliche Geometrie besitzen und zusätzlich mit einer hohen Packungsdichte versehen werden können. Vorteilhaft an diesen Wirbelschicht-Verfahren ist weiterhin, dass die mikroskopische Materialzusammensetzung der Rohlinge (siehe die Konzentration der einzelnen Bestandteile bzw. Komponenten und deren Verteilung im Volumen des Rohlings) sehr präzise und reproduzierbar eingestellt werden kann.

Bei der Herstellung der Abstandhalterpartikel nach diesen Verfahren werden die einzelnen anorganischen Komponenten in einem ersten Schritt gemahlen und danach in einem zweiten Schritt mit geeigneten flüssigen Lösungen und gegebenenfalls mit zusätzlichen Binder- und/oder Polymerisatoranteilen versetzt. Diese Mischung wird dann über eine spezielle Düseneinrichtung kontinuierlich in die Prozesskammer versprüht und so lange unter Einwirkung von Luft oder einem inerten Gas (Stickstoff, Argon usw.) verwirbelt, bis die gewünschte Rohlingsgröße, -form, -dichte usw. erreicht werden. Die einzelnen Bestandteile lassen sich aber auch einzeln oder in Kombinationen oder auch zeitlich versetzt usw. in den Reaktor einbringen. Die kugelförmigen Rohlinge lassen sich sowohl in einer vom Anwender wählbaren Zusammensetzung als auch in den gewünschten Durchmessern von etwa 100 µm bis 1000 µm, vorzugsweise im Bereich von etwa 150 µm bis etwa 800 µm, mit einer engen Dickenverteilung synthetisieren. Durch eine anschließende oder eine schon direkt im Syntheseprozess simultan durchgeführte Siebung wird die Dickenverteilung bzw. Korngröße der Rohlinge und somit letztendlich die geometrischen Abmessungen der Abstandhalter präzise festgelegt.

Mit den bevorzugten Verfahren können in einfacher Weise ohne wesentliche Beschränkungen weitere Zusätze beigemischt werden, um bestehende Eigenschaften bzw. Funktionen zu verbessern oder aber auch weitere Eigenschaften zusätzlich zu erhalten. Es lassen sich dadurch verbesserte Rohlinge bereitstellen, bei denen zum Beispiel eine erhöhte Konzentration an Kristallisationskeimen und/oder Keimbildnern mindestens partiell vorliegt, und/oder zusätzliche Materialien mit weiteren funktionellen Eigenschaften hinzugefügt werden. Letztere umfassen zum Beispiel Zusätze für eine Reibungsminderung, für eine Farbgebung, zur Beeinflussung der elektrischen bzw. elektrostatischen Charakteristika (siehe z. B. die elektrostatische Aufladbarkeit oder die Antistatikwirkung), zur Verbesserung des Vakuums durch die Implementierung von Materialien mit Getterwirkung, zur Verbesserung der Kompressionsfestigkeit, zur Beeinflussung des Klebe- bzw. Haftvermögens, zur Verbesserung der Strahlungsabsorptionseigenschaften (z. B. Mikrowellenabsorption usw.), Kombinationen daraus usw.. Die Zusätze können dabei homogen oder aber auch inhomogen im Volumen und/oder der Oberfläche der Rohlinge verteilt sein. Die auf den Oberflächen oder den oberflächennahen Bereichen der Rohlinge zumindest teilweise aufzubringenden Materialien lassen sich aber auch nachträglich durch andere bekannte Beschichtungsverfahren, wie z. B. Tauchen, Sprühen usw., applizieren.

Wie sich bei den Wirbelschicht-Versuchen gezeigt hat, kommt es ebenfalls auf die Größenverteilung der als Pulver vorliegenden anorganischen Ausgangskomponenten an. Besonders gute Ergebnisse werden erhalten, wenn die Ausgangskomponenten mit einer möglichst geringen Korngröße im Bereich von einigen Zehn Mikrometern versehen sind, weil sich dadurch eine ausreichend homogene Durchmischung der Einzelkomponenten im Rohlingsvolumen und eine optimale kugelige Form für die Rohlinge erreichen lassen. Die Korngrößenverteilung wird vorzugsweise so gewählt, dass etwa mindestens 70% der jeweiligen Ausgangskomponenten eine Korngröße im Bereich von kleiner als oder gleich etwa 40 µm besitzen.

Das positionsgenaue Aufbringen der Rohlinge auf den sehr großen Glasplattenoberflächen mit Abmessungen von bis zu 3,21 m x 6,00 m und darüber kann auf verschiedene Weise durchgeführt werden.

Bei einem ersten Verfahren ist vorgesehen, dass direkt auf die Glasoberfläche oder etwas von dieser beabstandet, auf der die Abstandhalter fest angebracht werden sollen, mindestens eine Schablone aufgelegt wird, die mit Öffnungen versehen ist, wobei der Durchmesser der Öffnungen etwas größer als der maximale Durchmesser der erfindungsgemäßen Rohlinge ausgelegt ist. Zur exakten Positionierung der Glasplatte und der Schablone lassen sich Markierungshilfen usw. anbringen, die durch ein optisches Bilderkennungssystem aufgezeichnet werden. Die Rohlinge lassen sich dann durch bekannte Techniken wie z. B. durch Rütteln, Bestreuen oder dergleichen in die Öffnungen der Schablone einbringen.

Bei einem zweiten Verfahren werden die erfindungsgemäßen Rohlinge unter Zuhilfenahme eines Transfermediums, wie z. B. einer Folie usw., positionsgenau auf den Glasplatten 1, 2, 3 abgelegt bzw. auf diese übertragen. Die Transfermedien können schon vorab mit speziellen Strukturen, Perforationen, Haftvermittler oder dergleichen zur Aufnahme der Rohlinge versehen sein. Mittels einer mechanischen Pressvorrichtung oder dergleichen lassen sich die Partikel dann im geforderten Raster oder Muster auf den Glasplattenoberflächen direkt ablegen bzw. befestigen. In einer anderen Modifikation dieses Verfahrens wird das mit den Rohlingen versehene Transfermedium zunächst vollflächig auf die Glasplattenoberflächen aufgebracht. Bei der anschließenden Wärmebehandlung wird das nicht benötigte Transfermedienmaterial verbrannt, pyrolysiert, chemisch aufgelöst oder auf eine andere Art und Weise entfernt, so dass nur die Rohlinge an den gewünschten Positionen auf den Glasoberflächen verbleiben.

Bei einem dritten Verfahren erfolgen die Aufnahme, der Transport sowie die Positionierung der Rohlinge auf den Glasplattenoberflächen durch mechanische Einrichtungen, in die kleine Öffnungen oder Kanäle eingebracht sind, durch die die Rohlinge mittels reduziertem Druck (Vakuum) angesaugt, gehalten und abgelegt werden können. Solche mechanische Einrichtungen können auch als Trommel, Walze oder dergleichen ausgelegt sein. An Stelle einer Luftansaugung können die Partikel auch unter Ausnutzung elektrostatischer Kräfte befestigt werden, wobei an den Oberflächen der Vorrichtungen und Geräte elektrisch isolierte Bereiche vorgesehen sind, an denen die Rohlinge unter Ausnutzung elektrostatischer Kräfte angebracht, gehalten und abgelegt werden. Zur Verbesserung bzw. Optimierung der elektrostatischen Aufladbarkeit können die Rohlinge mit geeigneten Substanzen, wie z. B. mit kationischen Verbindungen oder dergleichen, zusätzlich versehen werden.

Um die Anhaftung der Rohlinge beim oder nach dem Aufbringen zu verbessern, können auf den Glasplattenoberflächen flächig oder nur lokal zusätzliche organische Kleb- oder Haftmittel zur Anwendung gelangen. Als vorteilhaft hat sich erwiesen, wenn die Rohlinge auf ihrer Oberfläche vorab mindestens teilweise schon mit derartigen Substanzen versehen werden. Als organische Kleb- oder Haftmittel eignen sich solche Substanzen, die sich vorzugsweise schon bei der Wärmebehandlung nahezu rückstandsfrei verflüchtigen, verbrennen, pyrolysieren oder auf eine andere Art und Weise beseitigen lassen. In ganz besonders bevorzugter Weise werden Acrylatverbindungen, Acetatverbindungen, Zelluloseverbindungen, Wachse, Harze oder die schon als Binder-Lösungsmittel-Kombinationen direkt für die Herstellung der Rohlinge verwendeten Substanzen benutzt.

Die dargestellten Verfahren können auch kombiniert werden und/oder in ihrer Peripherie noch durch weitere zusätzliche Einrichtungen für andere Funktionen wie z. B. für eine Reinigung, eine Oberflächenaktivierung, ein Vorwärmen bzw. Aufheizen der Rohlinge oder dergleichen ergänzt werden.

Nach dem Aufbringen der erfindungsgemäßen Rohlinge auf den Glasoberflächen werden diese dann durch eine Wärmebehandlung mittels Strahlungsheizung (UV- bis IR-Bereich, Mikrowellenstrahlung, konzentriertes Laserlicht usw.), Induktion, Wärmekonvektion, Kombinationen daraus oder andere bekannte Techniken kontrolliert aufgeschmolzen bzw. kristallisiert und somit letztendlich die eigentlichen Abstandhalter mit der entsprechend Figur 2A besonders bevorzugten Geometrie erzeugt.

Da es durch das Fehlen von mitunter nur einem einzigen Abstandhalter und/oder durch zu große Toleranzen bzw. Schwankungen in der Höhe der Abstandhalter schon zu einem vollständigen Versagen des Verglasungselementes kommen kann, wird das Aufnehmen der Rohlinge, das Aufbringen der Rohlinge auf den Glasoberflächen 1, 2, 3 sowie auch die Bildung der Abstandhaltergeometrien vorzugsweise unter Zuhilfenahme von optischen Sensoren, Bilderkennungssystemen, Kamerasystemen oder dergleichen kontrolliert, überwacht bzw. gesteuert.

### Weitere Ausführungsbeispiele

### Ausführungsbeispiel 1

In einer besonders bevorzugten Ausführungsvariante sind die erfindungsgemäßen Rohlinge mit magnetisierbaren und/oder magnetischen Zusätzen versehen, wobei vorzugsweise Metalle (z. B. Fe) bzw. Metalllegierungen, anorganische Pigmente, Mineralien oder solche enthaltende Substanzen zur Anwendung gelangen. Als besonders geeignet erwies sich die Zugabe von magnetisierbaren Eisenoxiden z. B. in Form von Eisen(II,III)-oxid-Pulver, welche aufgrund ihrer speziellen Kristallstruktur (Eisenoxidspinelle, Magnetit oder magnetitähnliche Strukturen, Maghemit) sehr gute magnetische Eigenschaften aufweisen. Zur Herstellung der mit magnetischen Eigenschaften versehenen Rohlinge wird das Eisenoxidpulver den anderen Ausgangskomponenten definiert zugemischt. Die Konzentration der magnetisierbaren Eisenoxide in den Rohlingen wird auf Werte zwischen 0,5 Gew.% und 25 Gew.%, vorzugsweise zwischen 0,5 Gew.% und etwa 10 Gew.% eingestellt, ohne dass die mechanische Stabilität zu sehr beeinträchtigt wird. Der mittlere Teilchendurchmesser der Eisenoxidpigmente beträgt vorzugsweise nur einige wenige Mikrometer (kleiner etwa 10 µm).

Es können auch andere magnetische und/oder magnetisierbare Substanzen verwendet bzw. zugemischt werden, wobei hier ähnliche Konzentrationen zu wählen sind. Aber auch durch die Einlagerung von magnetischen oder magnetisierbaren Substanzen direkt in die Glasmatrix der Glasfritte, was vorzugsweise schon bei der Herstellung der Glasfritte erfolgt, lassen sich die erfindungsgemäßen Rohlinge mit magnetischen Eigenschaften versehen.

Die derart bereitgestellten Rohlinge können nun in besonders bevorzugter Weise mittels Magnetfelder erzeugende und/oder Magnetfelder beeinflussende bzw. steuernde Einrichtungen nahezu berührungslos und somit sehr sanft auf den Glasoberflächen abgelegt bzw. angeordnet werden. Dadurch können sowohl die bei den herkömmlichen Anlagen- und Verfahrenstechniken auftretenden mechanischen Beanspruchungen und somit mögliche Beschädigungen der Rohlinge weiter reduziert bzw. sogar nahezu vollständig vermieden werden.

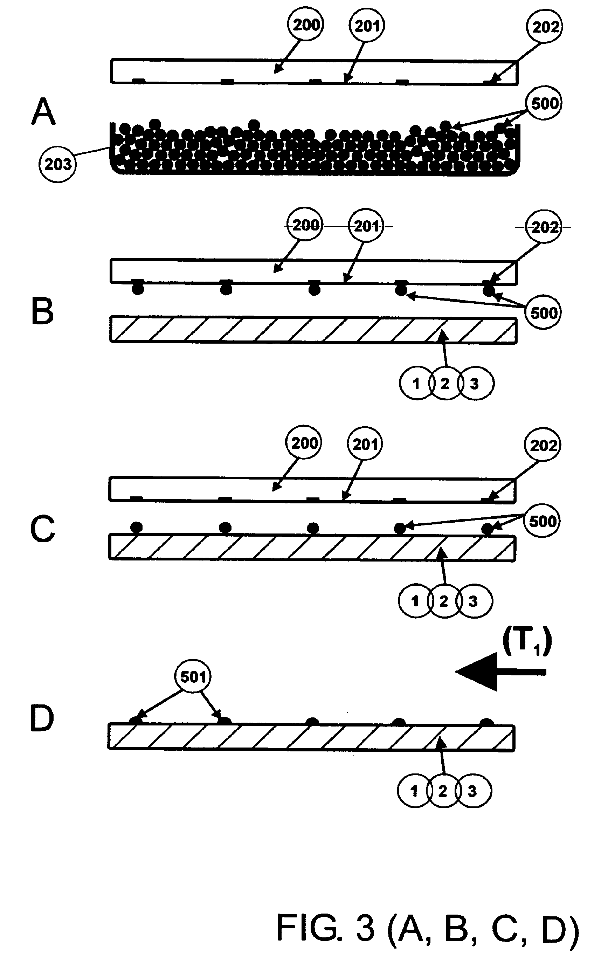

In Figur 3 ist beispielhaft eine Einrichtung bzw. Vorrichtung zur Durchführung der Aufnahme, des Transportes, der Positionierung, der Anbringung und/oder der Halterung der mit magnetischen Eigenschaften versehenen Rohlinge (Abstandhalterpartikel) 500 schematisch dargestellt.

In einer ersten bevorzugten Ausgestaltungsvariante ist die Vorrichtung 200 auf einer ihrer Oberflächen 201 mit Bereichen 202, an denen magnetische Felder lokal gebildet sind, eingerichtet. Die lokalen Bereiche 202 können mit zusätzlichen Vertiefungen, Aussparungen oder dergleichen versehen sein. Bevorzugt ist, wenn die einzelnen Bereiche (202) jeweils nur einem einzelnen Rohling (500) zugeordnet sind, das heißt, dass nur ein einziger Rohling an einem lokalen Bereich 202 aufgenommen, transportiert, positioniert und/oder angebracht werden kann. Die lokalen Magnetfelder in den Bereichen (202) können durch aktive magnetische und/oder magnetisierbare Komponenten wie zum Beispiel geometrisch angepasster Elektromagnete und/oder Permanentmagnete, Stifte, Bauelemente, Beschichtungen, Filme, Folien, geeignete Materialien, Kombinationen daraus und dergleichen bereitgestellt werden. Es können zusätzlich auch passive Komponenten, wie zum Beispiel spezielle magnetische Abschirmungen, zur Anwendung gelangen. Vorzugsweise entspricht die Anordnung der Bereiche 202 auf der Vorrichtung 200 dem gewünschten Abstandhalterraster.

Die zum Beispiel in einem Behälter 203 bevorrateten Rohlinge 501 können nun durch die lokalen Magnetfelder an den Bereichen 202 der Vorrichtung 200 durch magnetische Kraftwirkungen anhaften (siehe Figur 3A), zu den mit den Abstandhaltern zu versehenen Glasplatten 1, 2, 3 transportiert (siehe Figur 3B) und dort präzise abgelegt werden (siehe Figur 3C). Anschließend werden die Rohlinge durch eine definierte Wärmebehandlung bei Temperaturen T₁ von kleiner als oder gleich der Transformationstemperatur der für die Glasplatten 1, 2, 3 verwendeten Glastypen aufgeschmolzen und mindestens teilweise kristallisiert, wobei die Abstandhalter 501 mit der besonders bevorzugten Geometrie entsprechend Figur 2A ausgebildet werden.

Statt durch einen Behälter können die Rohlinge auch mittels Folien, Transportbändern oder dergleichen der Vorrichtung 200 zugeführt werden. Das eigentliche Ablegen der Rohlinge auf den Glasplatten 1, 2, 3 kann durch eine kontrollierte Änderung der in den Bereichen 202 auf die Rohlinge lokal einwirkenden magnetischen Feldstärken durchgeführt werden. Hierzu sind die Bereich 202 und/oder deren Umgebung als steuer- bzw. schaltbare, mit magnetisch abschirmenden und/oder die Magnetfeldstärke beeinflussenden Wirkungen versehende Einrichtungen eingerichtet. Entsprechend einer ersten Möglichkeit lassen sich die lokalen Magnetfelder in den Bereichen 202 durch Elektromagnete oder dergleichen erzeugen, die über die externen elektrischen Versorgungseinrichtungen gesteuert bzw. geschaltet werden können. Andere Möglichkeiten sehen vor, die gezielte Änderung der Magnetfeldstärke in den lokalen Bereichen 202 durch eine Änderung der Position der Magnete und/oder das mindestens teilweise Abdecken/Öffnen der Bereiche 202 mittels magnetischer Abschirmmaterialien und/oder durch die Überlagerung/Beeinflussung mit anderen Magnetfeldern oder Kombinationen daraus usw. durchzuführen. Das Ablegen der Rohlinge auf den Glasplattenoberflächen 1, 2, 3 mittels Überlagerung/Beeinflussung mit anderen Magnetfeldern lässt sich z. B. so bewerkstelligen, dass nun auch auf den Glasplattenoberflächen 1, 2, 3 ein im Vergleich zur Vorrichtung 200 geometrisch nahezu identisches Magnetfeldarray angeordnet wird, wobei jedoch dessen lokale Magnetfeldstärken die der Vorrichtung 200 übertreffen, so dass sich die Rohlinge bei Annäherung der Vorrichtung 200 an die Glasplatten 1, 2, 3 aufgrund der höheren resultierenden Kraftwirkungen in Richtung Glasplatten ablegen lassen.

In einer zweiten bevorzugten Ausgestaltungsvariante sind die erforderlichen lokalen Magnetfelder nunmehr direkt an oder auf den Oberflächen der Glasplatten 1, 2, 3 eingerichtet. Vorzugsweise entspricht die geometrische Anordnung gleich der Rasteranordnung der Abstandhalter. Zur Erzeugung der Magnetfeldanordnung an den Glasplattenoberflächen werden die erforderlichen technischen Einrichtungen zweckmäßigerweise hinter den Glasplatten angeordnet. Die Einrichtungen können so beschaffen sein, dass diese auch zusätzlich als Halterung, Transportmittel, Einrichtung zur Qualitätskontrolle, Wärmebehandlungseinrichtung usw. mindestens teilweise verwendet werden können. Mit dieser Variante können die Rohlinge nunmehr sogar direkt, das heißt unter Verzicht auf die Vorrichtung 200, positionsgenau auf die Glasoberflächen aufgebracht werden. Von ganz besonderem Vorteil ist, wenn die lokalen Magnetfelder auch bei der anschließenden Wärmebehandlung noch weiterhin wirksam bleiben. Die Rohlinge können somit durch die einwirkenden magnetischen Kräfte nunmehr sogar bis bzw. beim Schmelz- und Kristallisationsprozess in ihrer Position festgehalten werden, so dass sich mögliche Erschütterungen, Vibrationen oder andere störende Einflüsse während des Transportes usw. nicht auf die Qualität auswirken können.

Mit den vorgeschlagenen Verfahren lassen sich die Rohlinge mit einer besonders hohen Genauigkeit und vor allem einer sehr hohen Reproduzierbarkeit auf die Glasplattenoberflächen aufbringen. Bei sachgemäßer Ausführung lassen sich im Hinblick auf die Positionierung der Rohlinge und somit die Positionierung der Abstandhalter sehr geringe laterale Abweichungen von nur wenigen Zehn Mikrometern erreichen, was insbesondere für die Bereitstellung von beidseitig mit Abstandhaltern versehenen Glasplatten (vergl. Figuren 1B und 1C) von Bedeutung ist.

Weitere Verfahrensmodifikationen sehen vor, das Aufbringen der erfindungsgemäßen Rohlinge linienförmig und/oder in anderen frei wählbaren Rastergeometrien und/oder mittels unabhängig voneinander steuerbaren Rasteranordnungen usw. vorzunehmen. Durch die Verwendung von entsprechenden Walzen, Trommeln, Folien oder dergleichen kann auch ein kontinuierlicher Verfahrensablauf realisiert werden. Aufgrund der Ausnutzung der magnetischen Kräfte ist es außerdem möglich, das Anbringen der Rohlinge auch in einer von der liegenden Anordnung der Glasplatten abweichenden Konstellation vorzunehmen.

Es sind weitere Kombinationen aus diesen Beispielen, oder mit anderen genannten Verfahrensvarianten (siehe z. B. Elektrostatik, Luftansaugung), oder auch Kombinationen mit anderen, dem Fachmann bekannte Verfahren möglich.

### Ausführungsbeispiel 2

Bei einer weiteren Ausführungsform der Erfindung ist vorgesehen, dass die Abstandhalter bei dem aus einer ersten, nach außen gerichteten Glasplatte 1, einer zweiten, nach innen gerichteten Glasplatte 2 und mindestens einer dritten, zwischen den Glasplatten 1, 2 angeordneten, innen angeordneten Glasplatte 3, aufgebauten Verglasungselement beidseitig fest auf die innen angeordnete Glasplatte 3 aufgebracht werden. Diese Variante ist von besonderem Vorteil, weil keine feste bzw. starre Verbindung der Abstandhalter mit den Oberflächen der Glasplatten 1, 2 nötig ist und sich dadurch vor allem auch das Bruchrisiko bei der praktischen Nutzung des Bauteiles, das gerade durch die mechanische Bewegungen und Deformationen der Glasplatten 1, 2 hervorgerufen wird, weitestgehend vermieden werden kann. In besonders vorteilhafter Weise werden die beidseitig mit Abstandhaltern 5 versehenen Glasplatten 3 mindestens teilweise schwimmend bzw. frei beweglich, das heißt mindestens teilweise ohne feste Anbindung zur Randabdichtung, in das Verglasungselement 10 eingebaut. Ganz besonders bevorzugt ist die Gestaltung, bei der die Glasplatte 3 an keiner der Kanten mit der Randabdichtung 6, 601 fest verbunden ist, sich also nahezu völlig frei zwischen den Glasplatten 1, 2 bewegen kann (siehe Figuren 1B und 1C). Dadurch können die unterschiedlichsten äußeren Belastungen und/oder Deformationen bzw. thermischen Ausdehnungen und/oder geometrische Schwankungen noch besser ausgeglichen und vor allem gleichmäßig verteilt werden. Vorzugsweise ist die innen liegende Glasplatte 3 nicht beschichtet und weist eine solare Absorption von kleiner oder gleich 0,17, vorzugsweise kleiner oder gleich 0,08 auf.

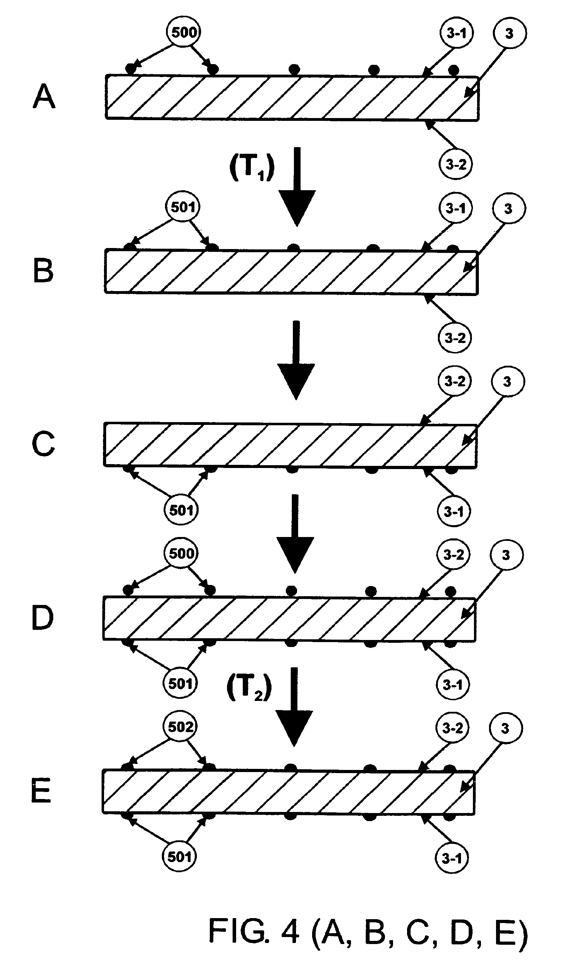

Die Bereitstellung einer verbesserten beidseitig mit Abstandhaltern versehenen Glasplatte 3 kann durch die Verfahrensschritte erfolgen, die im Folgenden unter Bezug auf Figur 4 erläutert sind.

In einem ersten Verfahrenschritt werden die erfindungsgemäß verwendeten Abstandhalterpartikel entsprechend dem gewünschten geometrischen Abstandhalterraster auf der nach oben orientierten Oberfläche 3-1 der vorab gereinigten Glasplatte 3 abgelegt (siehe Figur 4A). Dabei werden in besonders bevorzugter Weise die Rohlinge mit magnetischen und/oder magnetisierbaren Substanzen bereitgestellt. Dadurch kann das Aufbringen der erfindungsgemäßen magnetischen bzw. magnetisierbaren Rohlinge 500 mittels Magnetfelder enthaltende Einrichtungen bzw. technische Vorrichtungen, wie oben beschrieben wurde, erfolgen. Die Rohlinge können dabei in einfacher Weise auf den Oberflächen der Glasplatten 1, 2, 3 abgelegt werden. Durch die Zuhilfenahme von Haftvermittlern (z. B. Klebstoffe, wie weiter oben erläutert) und/oder durch direkt an oder auf den Oberflächen der Glasplatten 1, 2, 3 eingerichtete lokale Magnetfelder und/oder durch die Nutzung elektrostatischer Kräfte und/oder durch andere bekannte Verfahren kann die positionsgenaue Erstfixierung der Rohlinge verbessert werden. Anschließend werden die Rohlinge durch eine definierte Wärmebehandlung bei Temperaturen T₁ von kleiner als oder gleich der Transformationstemperatur des für die Glasplatte 3 verwendeten Glastyps aufgeschmolzen und mindestens teilweise kristallisiert, wobei die Abstandhalter 501 mit der besonders bevorzugten Geometrie entsprechend Figur 2A ausgebildet werden (siehe Figur 4B). Erst bei der Wärmebehandlung wird, z. B. durch das Verschmelzen der in den Abstandhalterpartikeln enthaltenen niedrig schmelzenden Glaskomponenten mit den Glasplattenoberflächen, die eigentliche bzw. endgültige Fixierung bzw. Haftung für die Abstandhalter 5, 501, 502 hergestellt. Insbesondere durch die Verwendung der erfindungsgemäßen Abstandhalterpartikel lassen sich an der Kontaktfläche 5-2 besonders dauerhafte und vor allem besonders mechanisch bzw. thermomechanisch hochbelastbare Haftverbindungen bereitstellen. Im nächsten Schritt wird die Glasplatte 3 gedreht, so dass die Oberfläche 3-2 nach oben weist (siehe Figur 4C). Zum erneuten Auflegen der magnetischen Abstandhalterpartikel 500 auf die Oberfläche 3-2 entsprechend Figur 4D können die gleichen technischen Einrichtungen bzw. Vorrichtungen verwendet werden. Bei einer weiteren Wärmebehandlung, die bei Temperaturen T₂ von vorzugsweise kleiner als oder gleich T₁ durchgeführt wird, können nun auch auf der Oberfläche 3-2 aus den kugelförmigen Abstandhalterpartikeln die erfindungsgemäßen Abstandhalter 502 geformt werden (siehe Figur 4E). Die beidseitig mit den erfindungsgemäßen Abstandhaltern versehene Glasplatte 3 kann dann zur weiteren Herstellung des Verglasungselementes 10 verwendet werden.

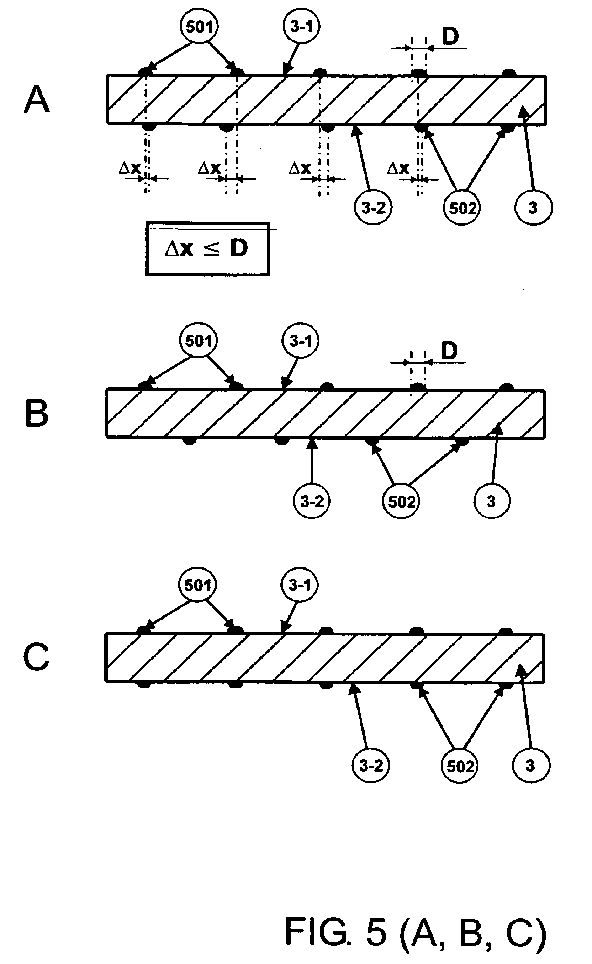

In den Figuren 5A und 5B sind beidseitige Anordnungen der Abstandhalter auf der Glasplatte 3 im seitlichen Schnitt schematisch dargestellt. Bei Verwendung von Glasplatten 3 mit geringen Dicken von kleiner als oder gleich 3 mm, vorzugsweise zwischen etwa 2,1 mm und etwa 0,8 mm, kommt es zur Sicherstellung einer besonders hohen mechanischen Stabilität vor allem darauf an, dass die Abstandhalter 501, 502 auf den Oberflächen 3-1, 3-2 möglichst exakt gegenüberliegend positioniert sind. Die lateralen Abweichungen Δx der Abstandhalterpartikel (bzw. nach deren Wärmebehandlung der Abstandhalter 501, 502) voneinander (siehe Figur 5A) sind so vorzusehen, dass Δx einen Wert von vorzugsweise etwa dem Abstandhalterdurchmesser D (vergleiche Figur 2) nicht überschreitet.

Diese Bedingung stellt u. a. auch einen guten Kompromiss zu den erreichbaren Herstellungstoleranzen und -genauigkeiten dar. Grundsätzlich gilt aber, dass bei einer weiteren Verringerung der lateralen Abweichungen Δx die mechanischen und thermomechanischen Eigenschaften der Verglasungselemente 10 sich noch weiter verbessern lassen. Werden für die Glasplatte 3 jedoch Glasplatten von größer als oder gleich 4 mm Dicke gewählt, so lassen sich die Abstandhalter 501, 502 auf den jeweils gegenüberliegenden Oberflächen 3-1,3-2 auch versetzt voneinander anbringen, wie es in Figur 5B schematisch dargestellt ist.

Die beschriebenen Ausführungen sehen aber auch Varianten vor, bei denen für die Abstandhalter 501, 502 auch unterschiedliche Materialien bzw. Materialzusammensetzungen mit durchaus teilweise voneinander abweichenden Eigenschaften verwendet und/oder die Abstandhalter 501, 502 nahezu gleichzeitig auf den Oberflächen 3-1, 3-2 aufgebracht und der Wärmebehandlung unterzogen werden können. Es sind weitere Kombinationen aus diesen Beispielen mit anderen beschriebenen Ausführungsvarianten möglich oder auch Kombinationen mit anderen, dem Fachmann bekannte Verfahren.

### Ausführungsbeispiel 3

Für das ästhetische Empfinden hat es sich als ganz besonders vorteilhaft erwiesen, wenn die Abstandhalter in bevorzugter Weise transluszent oder lichtundurchlässig ausgelegt sind. Der Farbtongebung der Abstandhalter sind kaum Grenzen gesetzt. Jedoch hat es sich als vorteilhaft herausgestellt, wenn die Abstandhalter 5 im für das menschliche Auge sichtbaren Spektralbereich nur ein geringes Reflexionsvermögen von kleiner oder gleich 15% besitzen und in möglichst neutralen, das Farbempfinden wenig störenden Farbtönen wie z. B. schwarz oder schwarzähnlich, grau oder gräulich, dunkelblau bis tief violett, dunkelgrün usw. ausgeführt werden. Eine Färbung der Abstandhalter kann durch die Zugabe bekannter, gut lichtabsorbierender Oxide (zum Beispiel Mangan-, Eisenoxide usw.), von Metallen (zum Beispiel Fe usw.) oder von anorganischen Pigmenten (zum Beispiel Co-, Cu-, Cr-, Fe-, Mn-Verbindungen), oder Gemische aus diesen oder von anderen bekannten lichtabsorbierenden anorganischen Substanzen erfolgen. Entscheidend für eine vollständige Durchfärbung der Abstandhalter ist, dass die Konzentration der lichtabsorbierenden Substanzen so gewählt wird, dass der optische Absorptionskoeffizient der Abstandhalter 5 im sichtbaren Spektralbereich letztendlich einen Wert von 10³ cm⁻¹ und darüber aufweist. Dabei sind Konzentrationen für die Zusätze von kleiner als oder gleich 10% Gew.%, vorzugsweise kleiner oder gleich etwa 5 Gew.% schon völlig ausreichend. Ein besonders ästhetisch ansprechender Grau- bis Schwarzton lässt sich vorzugsweise durch die Zumischung von Mangan- und/oder Eisenoxiden erreichen. Um eine ausreichende visuelle Homogenität zu erzielen, werden die lichtabsorbierenden Substanzen in Pulverform mit mittleren Körnungsdurchmessern von vorzugsweise kleiner oder gleich etwa 20 µm verwendet.

### Ausführungsbeispiel 4

Wie sich bei der praktischen Nutzung der Verglasungselemente gezeigt hat, lassen sich die erfindungsgemäßen Abstandhalter unter Ausnutzung der Hin-und-Her-Bewegungen während des praktischen Gebrauches der Verglasungselemente 10 an solchen exponierten Stellen, die mit Unebenheiten bzw. Toleranzen in der Abstandhalterhöhe h versehen sind, an den Kontaktflächen 5-1 gezielt abflachen (vergleiche Figuren 2B und 5C). Auf diese Weise werden unerwünschte Schwankungen in der Abstandhalterhöhe h quasi von alleine eliminiert bzw. repariert. Derartige Abweichungen können zum Beispiel durch herstellungsbedingte Toleranzen in der Zusammensetzung und/oder der Dichte der Rohlinge, durch Temperaturunterschiede während der Wärmebehandlung usw. entstehen.

Die Abflachung und somit die Ausbildung der bevorzugten Abstandhaltergeometrie ähnlich der Geometrie einer Kugelschicht (vergleiche Figuren 2B und 5C) lässt sich auch schon vorab durch ein gezieltes Abschleifen erreichen. Ein erstes Verfahren sieht vor, dass zunächst auf die mit Abstandhaltern versehene Glasplatte eine Arbeitsplatte mit einer komplementären Oberfläche aufgelegt wird. Die Form der komplementären Oberfläche entspricht dabei der Form des Verglasungselementes 10, die entweder plan oder aber gebogen bzw. gewölbt gestaltet sein kann. Die Arbeitsplatte kann mit einer glatten oder rauhen bzw. strukturierten Oberfläche versehen sein. Durch eine erzwungene Relativbewegung und den dabei auftretenden Reibungskräften wird das überschüssige Abstandhaltermaterial abgetragen. Der erforderliche Anpressdruck kann dabei schon durch das Eigengewicht der Arbeitsplatte oder aber durch entsprechende Einrichtungen bereitgestellt werden. Als geeignetes Arbeitsplattenmaterial kann z. B. eine Glasplatte mit einem ausreichenden Eigengewicht zur Anwendung gelangen, wobei in Abhängigkeit von den Abmessungen der Glasplatten 1, 2, 3 die Arbeitsplattendicken im Bereich von 4 mm bis etwa 19 mm auszuwählen sind. Die erzwungene Relativbewegung lässt sich in Anlehnung an die in der Praxis auftretenden Scherbeanspruchungen durch ein erzwungenes Hin-und-Her-Schieben bzw. -Drehen, eine Vibrationsbewegung (z. B. mittels Ultraschall oder dergleichen), eine oszillierende Bewegung oder Kombinationen daraus oder andere bekannte Verfahren bewerkstelligen. Bei einer anderen Variante ist vorgesehen, dass die komplementäre Oberfläche durch einen planen oder geometrisch geformten Tisch bzw. eine derartige Einrichtung gebildet wird, auf die dann die mit den Abstandhaltern versehenen Glasplatten aufgelegt werden. Die Relativbewegung kann dann in der schon beschriebenen Weise durchgeführt werden. Es ist aber auch möglich, die beidseitig mit Abstandhaltern versehenen Glasplatten oder aber auch mehrere solcher Glasplatten in Form von einem Stapel zusammenzufügen und die entsprechenden Oberflächen gleichzeitig zu bearbeiten. In anderen Varianten kann die Abflachung auch mittels bekannter Schleif-, Fräseinrichtungen oder dergleichen vorgenommen werden.

Mit den vorgeschlagenen Verfahren können sehr hohe Genauigkeiten der Abstandhalterhöhe im Bereich von mitunter weniger als etwa 10 µm gleichmäßig über die gesamte Oberfläche der Glasplatten 1, 2, 3 erzielt werden.

In einer weiteren Modifikation lassen sich mit diesen Verfahren sogar reibungsmindernde Materialien nur auf die dann später im praktischen Gebrauch durch die Hin-und-Her-Bewegungen beanspruchten Kontaktflächenbereiche 5-1 selektiv aufbringen. Zu diesem Zweck werden die bei der Bearbeitung direkt mit den Abstandhaltern in Kontakt tretenden Einrichtungen oder Teile davon (z. B. aufgelegte Platten, Oberflächen des Vibrationstisches, Schleifwerkzeuge usw.) schon vorab mit bekannten reibungsmindernden Substanzen ausgestattet, so dass eine sehr genaue und selektive Anlagerung der reibungsmindernden Substanzen an den Kontaktflächen 5-1 erfolgen kann. Als reibungsmindernde Substanzen eignen sich vor allem solche anorganischen Stoffe wie Kohlenstoff bzw. kohlenstoffhaltige Verbindungen, einige, meist weichere Metalle und Metallverbindungen (z. B. Sn, Zn, Pb usw.), Sulfide (z. B. Molybdändisulfid) oder spezielle keramische Materialien usw..

Es haben sich noch weitere Verfahrensvarianten als geeignet erwiesen, die Kontaktflächen 5-1 mit niedrig reibenden Eigenschaften zu versehen. Eine erste, ganz besonders bevorzugte Variante umfasst die mindestens teilweise Freisetzung von reibungsmindernden Substanzen schon während des Abriebes direkt aus dem Abstandhaltermaterial. Hierzu können dem Abstandhaltermaterial vorab Metalle und/oder -legierungen und/oder -oxide (z. B. auf der Basis von Sn, Pb, C, Zn, Al, K, Na, Ca usw.), aber auch geeignete keramische und glasartige Stoffe, Kohlenstoff bzw. kohlenstoffhaltige Verbindungen oder dergleichen zugesetzt werden. Eine andere Modifikation dieser Variante besteht darin, die für eine Reibungsminderung geeigneten Substanzen durch zum Beispiel eine Reduktion von in den Abstandhaltern enthaltenen Metalloxiden oder dergleichen schon während der Herstellung bereitzustellen. Entsprechend dieser Verfahrensvariante hat sich die Verwendung von solchen Materialien für die erfindungsgemäßen Abstandhalter als gut geeignet erwiesen, bei denen vor allem Pb- und/oder Sn-, aber auch Zn- und/oder Al-Oxide einzeln oder in Kombination als Bestandteile enthalten sind. Auf diese Weise war es nun sogar möglich, auch ohne die Kosten erhöhende zusätzliche Materialbeimengungen geeignete reibungsreduzierte Kontaktflächen 5-1 zu erhalten. Besonders gute reibungsmindernde Wirkungen wurden hierbei für Pb-haltige Glaslote erreicht.

Andere Verfahrensvarianten nutzen solche bekannte reibungsmindernde Wirkungen wie z. B. die Verringerung der Oberflächenrauhigkeit und/oder die Modifikation der Oberflächenenergie durch Änderung der chemischen Bindungen (z. B. die Anlagerung von chemischen Verbindungen oder funktionellen Gruppen aus der Gasphase; z. B. fluorhaltige Verbindungen usw.). Es sind aber auch Kombinationen der genannten Verfahren untereinander möglich.

Die gezeigten Ausführungsbeispiele lassen sich nicht nur in der dargestellten Form verwenden, sondern vielmehr sind auch Kombinationen aus diesen Beispielen möglich. Die in der vorstehenden Beschreibung, den Zeichnungen und den Ansprüchen offenbarten Merkmale der Erfindung können einzeln oder auch in Kombination für die Verwirklichung der Erfindung in ihren verschiedenen Ausgestaltungen von Bedeutung sein.

## Patentansprüche

1. Wärmedämmendes Verglasungselement (10), das umfasst:
- eine Glasplatten-Anordnung mit mindestens zwei Glasplatten (1, 2, 3), die vorbestimmte gegenseitige Abstände aufweisen, wobei zwischen den Glasplatten (1, 2, 3) evakuierbare Zwischenräume (4, 4-1, 4-2) gebildet sind,
- eine Randabdichtungseinrichtung (6, 601), die zur Abdichtung der Zwischenräume (4, 4-1, 4-2) zwischen den Glasplatten gegenüber einer Umgebung des Verglasungselements mit einem Randabdichtungsmaterial eingerichtet ist, und
- eine Abstandhaltereinrichtung, die zur Einstellung der Abstände der Glasplatten eingerichtet ist und Abstandhalter (5, 501, 502) umfasst,
**dadurch gekennzeichnet, dass**
- die Abstandhalter (5, 501, 502) ein Glaslot oder eine Glasfritte enthalten,
- die Abstandhalter (5, 501, 502) mindestens eine Kristallisationssubstanz enthalten, die geeignet ist, im Glaslot oder in der Glasfritte Kristallisationskeime zu bilden und/oder die Bildung von Kristallisationskeimen zu fördern und/oder die Bildung von kristallinen Phasen zu fördern und mindestens eines von in einer Glasschmelze unlöslichem oder schwer löslichem keramischen Material, einem Metall, einem Fluorid, und einer reduzierenden Substanz umfasst,
- die Abstandhalter (5, 501, 502) eine kristallisierte Phase enthalten, deren Anteil größer als oder gleich 70 Vol.% beträgt,
- die Abstandhalter (5, 501, 502) die geometrische Form einer Kugelschicht mit einem Tangentialwinkel α im Bereich von 55° bis 90° und einem Durchmesser einer ersten Kontaktfläche (5-2), an der sie mit einer der angrenzenden Glasplatten (1, 2, 3) fest verbunden sind, zwischen 100 µm und 1000 µm aufweisen, wobei sie eine zweite, gegenüberliegende Kontaktfläche (5-1) aufweisen, an der sie auf der angrenzenden Glasplatte (1, 2, 3) frei beweglich angeordnet sind,
- eine Differenz der thermischen Ausdehnungskoeffizienten zwischen den Abstandhaltern (5, 501, 502) und den Glasplatten (1, 2, 3), mit denen die Abstandhalter an der ersten Kontaktfläche (5-2) fest verbunden sind, kleiner oder gleich ± 5·10⁻⁶ K⁻¹ ist.

2. Verglasungselement nach Anspruch 1, bei dem die Abstandhalter enthalten:
- bleihaltiges Glaslot mit einem Bleioxidgehalt von mindestens 15 Gew.%, insbesondere Blei-Zink-Borosilikatglas, Blei-Zink-Silikatglas, Blei-Alumo-Borosilikatglas, bleifreies Glaslot, insbesondere Zink-Phosphatglas, Alkali-Borosilikatglas mit Anteilen von Zink und/oder Wismut, und/oder wismuthaltiges Glaslot mit einem Wismutoxidgehalt von mindestens 15 Gew.%.

3. Verglasungselement nach einem der vorherigen Ansprüche, bei dem die Kristallisationssubstanz umfasst:
- ein keramisches Material, das die Elemente Zirkon und/oder Titan umfasst, insbesondere Zirkonsilikat, Zirkonoxid, Titanoxid, Titanate (z. B. Bleititanat) und/oder Kombinationen daraus, vorzugsweise mit einem Anteil von 0,5 bis 20 Gew.%,
- Pd, Cu, Ag oder Au,
- Alkali- bzw. Erdalkalifluoride, wie NaF, KF, CaF₂ oder MgF₂, und/oder
- Eisen(II)-, Zinn(II)-Verbindungen.

4. Verglasungselement nach Anspruch 1, bei dem
- ein Flächenverhältnis der zweiten Kontaktfläche (5-1) zu der ersten Kontaktfläche (5-2) kleiner oder gleich 0,75 ist.

5. Verglasungselement nach einem der vorhergehenden Ansprüche, bei dem
- die Abstandhalter (5, 501, 502) lichtabsorbierende Substanzen enthalten, die Oxide, insbesondere Mangan- oder Eisenoxide, Metalle, insbesondere Fe, anorganischen Pigmente, insbesondere Co-, Cu-, Cr-, Fe-, Mn-Verbindungen, und/oder Gemische aus diesen, und/oder andere lichtabsorbierende anorganische Substanzen umfassen, wobei eine Konzentration von kleiner als oder gleich 10 Gew.%, insbesondere kleiner als oder gleich etwa 5 Gew.% vorgesehen ist.

6. Verfahren zur Herstellung einer mit Abstandhaltern versehenen Glasplatte (1, 2, 3), mit den Schritten:
- Bereitstellung von Abstandhalterpartikeln (500), die ein Glaslot oder eine Glasfritte enthalten, mindestens eine Kristallisationssubstanz enthalten, die geeignet ist, im Glaslot oder in der Glasfritte Kristallisationskeime zu bilden und/oder die Bildung von Kristallisationskeimen zu fördern und/oder die Bildung von kristallinen Phasen zu fördern und mindestens eines von in einer Glasschmelze unlöslichem oder schwer löslichem keramischen Material, einem Metall, einem Fluorid, und einer reduzierenden Substanz umfasst, und eine charakteristische Querschnittsdimension im Bereich von 150 µm bis 1000 µm besitzen, und der Glasplatte (1, 2, 3),
- Aufbringung der Abstandhalterpartikel (500) auf einer ersten Glasoberfläche (3-1), und
- Bildung der Abstandhalter durch eine Wärmebehandlung der Abstandhalterpartikel (500), umfassend ein Aufschmelzen, eine Kristallisation und eine Ausbildung der Abstandhaltergeometrie auf der Glasoberfläche (3-1), bei einer Temperatur T₁, die kleiner als oder gleich der Transformationstemperatur des für die Glasplatte (1, 2, 3) verwendeten Glastyps ist, wobei
- die Abstandhalter (5, 501, 502) eine kristallisierte Phase enthalten, deren Anteil größer als oder gleich 70 Vol.% beträgt,
- die Abstandhalter (5, 501, 502) die geometrische Form einer Kugelschicht mit einem Tangentialwinkel α im Bereich von 55° bis 90° und einem Durchmesser einer ersten Kontaktfläche (5-2), an der sie mit der angrenzenden Glasplatte (1, 2, 3) fest verbunden sind, zwischen 100 µm und 1000 µm aufweisen,
- eine Differenz der thermischen Ausdehnungskoeffizienten zwischen den Abstandhaltern (5, 501, 502) und der angrenzenden Glasplatte (1, 2, 3) kleiner oder gleich ± 5·10⁻⁶ K⁻¹ ist.

7. Verfahren nach Anspruch 6, bei dem
- die Schritte Aufbringung von Abstandhalterpartikeln (500) und Wärmebehandlung auf einer zweiten Glasoberfläche (3-2) der Glasplatte (3) wiederholt werden, wobei die Wärmebehandlung auf der zweiten Glasoberfläche (3-2) bei einer Temperatur T₂ erfolgt, die kleiner als oder gleich der Temperatur T₁ ist.

8. Verfahren nach einem der Ansprüche 6 bis 7, bei dem die Aufbringung der Abstandhalterpartikel (5, 501, 502) mindestens eines der folgenden Verfahren umfasst:
- Aufbringung der Abstandhalterpartikel (5, 501, 502) durch mindestens eine mit Öffnungen versehene Schablone,
- Aufbringung der Abstandhalterpartikel (5, 501, 502) durch ein Transfermedium, insbesondere eine Folie, wobei das Transfermedium Strukturen oder Perforationen oder Haftvermittler zur Aufnahme der Abstandhalterpartikel enthält,
- Aufbringung der Abstandhalterpartikel (5, 501, 502) durch einen Unterdruck und/oder elektrostatische Kräfte, und
- Aufbringung der Abstandhalterpartikel (5, 501, 502) durch magnetische Kräfte.

9. Verfahren nach einem der Ansprüche 6 bis 8, mit dem Schritt
- Bereitstellung organischer Kleb- oder Haftmittel zur Anhaftung der Abstandhalterpartikel (500) auf den Glasplatten (1, 2, 3), wobei als organische Kleb- oder Haftmittel Substanzen, die sich vor oder während einer Wärmebehandlung rückstandsfrei beseitigen, insbesondere verflüchtigen, verbrennen, oder pyrolysieren lassen, vorgesehen sind, insbesondere Acrylatverbindungen, Acetatverbindungen, Zelluloseverbindungen, Wachse, Harze und/oder die schon als Binder-Lösungsmittel-Kombinationen direkt für die Herstellung der Abstandhalterpartikel verwendeten Substanzen.

10. Verfahren nach einem der Ansprüche 6 bis 9, bei dem
- die Abstandhalterpartikel (500) mit einem mechanischen Formgebungsverfahren, insbesondere durch Pressen, Spritzen und/oder Stanzen, oder mit einem Wirbelschicht-Verfahren, insbesondere durch Sprühgranulation und/oder Agglomeration, bereitgestellt werden.

11. Verfahren nach einem der Ansprüche 6 bis 10, mit dem Schritt
- Bildung der Kugelschichtform der Abstandhalter durch Abrieb von Abstandhaltermaterial an Kontaktstellen (5-1) in einer Stapelanordnung mittels einer erzwungenen Relativbewegung zwischen mindestens einem Teil der Abstandhalter (5, 501, 502) und einer direkt an den Kontaktflächen (5-1) der Abstandhalter gleichmäßig anliegenden komplementären Oberfläche unter Einwirkung von Anpresskräften oder mittels einer Schleif- oder Fräseinrichtung.

12. Verfahren nach einem der Ansprüche 6 bis 11, bei dem
- die Abstandhalterpartikel (500) magnetisierbare und/oder magnetische Zusätze und/oder mindestens eine Modifizierungssubstanz enthalten, die zur Beeinflussung der Kristallisation, für eine Reibungsminderung, für eine Farbgebung, zur Beeinflussung der elektrischen oder elektrostatischen Charakteristika, insbesondere eine elektrostatische Aufladbarkeit oder Antistatikwirkung, zur Verbesserung des Vakuums durch die Implementierung von Materialien mit Getterwirkung, zur Verbesserung der Kompressionsfestigkeit, zur Beeinflussung des Klebe- bzw. Haftvermögens, zur Verbesserung der Strahlungsabsorptionseigenschaften (z. B. Mikrowellenabsorption usw.) oder Kombinationen daraus geeignet ist.

13. Verfahren zur Herstellung eines wärmedämmenden Verglasungselements (10), mit den Schritten:
- Bereitstellung eines Verglasungselements gemäß einem der Ansprüche 1 bis 5,
- Evakuierung der Verglasungselements durch Anlegen eines Unterdruckes an eine Evakuierungsöffnung, und
- Verschließen der Evakuierungsöffnung.

14. Verfahren nach Anspruch 13, bei dem
- mindestens eine der Glasplatten des Verglasungselements mit einem Verfahren gemäß einem der Ansprüche 6 bis 12 hergestellt ist.

15. Verfahren nach Anspruch 13 oder 14, bei dem
- drei Glasplatten (1, 2, 3) vorgesehen sind, von denen die mittlere Glasplatte (3) an keiner der Kanten mit der Randabdichtung (6, 601) fest verbunden ist und zwischen den Glasplatten (1, 2) bewegt werden kann.

16. Verfahren nach einem der Ansprüche 13 bis 15, mit den Schritten
- Anbringen des Evakuierungsrohres (7),
- Auftragen von Randversiegelungs- (6, 601) und/oder Dichtungsmaterialien, und
- Aufschmelzen der Randversiegelungs- (6, 601) und/oder Dichtungsmaterialien zur druckdichten Versiegelung am Rand des Verglasungselementes (10) und am Evakuierungsrohr (7), wobei anschließend
- die Evakuierung der Verglasungselemente (10) bei erhöhten Temperaturen bis zu einem Enddruck im Bereich von 10⁻¹ Pa bis 10⁻³ Pa oder darunter erfolgt, und
- das druckdichte Verschließen des Evakuierungsrohres (7) erfolgt, und
- eine Abkühlung der Verglasungselemente (10) auf Raumtemperatur vorgesehen ist.

## Claims

1. Heat insulating glazing element (10), comprising:
- a glass pane arrangement with at least two glass panes (1, 2, 3), comprising predefined mutual spaces, whereby evacuable gaps (4, 4-1, 4-2) are formed between the glass panes (1, 2, 3),
- an edge seal assembly (6, 601,) provided for sealing the gaps (4, 4-1, 4-2) between the glass panes against the surroundings of the glazing element, equipped with edge seal material, and
- a spacer assembly provided for setting the distances between the glass panes and comprising spacers (5, 501, 502),
**characterised in that**
- the spacers (5, 501, 502) comprise one glass solder or one glass frit,
- the spacers (5, 501, 502) comprise at least one crystallization substance suitable to form nuclei of crystallization in the glass solder or the fritted glass and/or to promote the formation of nuclei of crystallization and/or to promote the formation of crystalline phases and comprising at least one of a glass melt-insoluble or low solubility ceramic material, a metal, a fluoride, and a reducing substance,
- the spacers (5, 501, 502) comprise a crystallized phase, whose share is greater or equal to 70 % by volume,
- the spacers (5, 501, 502) comprise the geometric shape of a spherical slice with a tangential angle α in the range between 55° and 90° and a diameter of a first contact area (5-2), on which they are rigidly connected with one of the adjacent glass panes(1, 2, 3), and amount to between 100 µm and 1000 µm, whereby they comprise a second contact area on the opposite side (5-1), on which they are arranged, freely mobile, on the adjacent glass pane(1, 2, 3),
- a difference of the thermal expansion coefficients between the spacers (5, 501, 502) and the glass panes (1, 2, 3), with which the spacers are rigidly connected on the first contact area(5-2), is less than or equal to ± 5·10⁻⁶ K⁻¹.

2. Glazing element according to claim 1, in which the spacers comprise:
- lead-containing solder glass with a minimum lead oxide content of 15 % by volume, in particular lead zinc borosilicate glass, lead zinc silicate glass, lead aluminoborosilicate glass, lead- free solder glass, in particular zinc phosphate glass, alkali borosilicate glass containing parts of zinc and/or bismuth and/or bismuth-containing solder glass with a minimum bismuth oxide content of 15 % by weight.

3. Glazing element according to one of the preceding claims in which the crystallization substance comprises:
- a ceramic material comprising the elements zirconium and/or titanium, in particular zirconium silicate, zirconium oxide, titanium oxide, titanates (e. g. lead titanate) and/or combinations thereof, preferably with a ratio of 0.5 to 20 % by weight,
- Pd, Cu, Ag or Au,
- alkali and alkaline-earth fluorides, such as NaF, KF, CaF₂ or MgF₂, and/or
- iron(II), tin(II) compounds.

4. Glazing element according to claim 1, for which
- an area ratio between the second contact area (5-1) and the first contact area (5-2) is less than or equal to 0.75.

5. Glazing element according to one of the preceding claims, in which
- the spacers (5, 501, 502) contain light-absorbing substances, comprising oxides, in particular manganese or iron oxides, metals, in particular Fe, inorganic pigments, in particular Co, Cu, Cr, Fe, Mn compounds, and/or mixtures thereof, and/or other light absorbing inorganic substances, whereby a concentration of less than or equal to 10 % by weight, in particular less than or equal to about 5 % by weight is planned.

6. Method for the manufacture of a glass pane (1, 2, 3) equipped with spacers, comprising the steps:
- provision of spacer particles (500) comprising a glass solder or a glass frit, at least one crystallization substance suitable to form nuclei of crystallization in the solder glass or in the fritted glass and/or to promote the formation of nuclei of crystallization and/or to promote the formation of crystalline phases and comprising at least one of a glass melt-insoluble or low solubility ceramic material, a metal, a fluoride, and a reducing substance and possessing a characteristic cross-sectional dimension in the range between 150 µm and 1000 µm and the glass pane (1, 2, 3),
- application of the spacer particles (500) on a first glass surface(3-1), and
- creation of the spacers through heat treatment of the spacer particles (500), comprising the founding, crystallization and creation of the spacer geometry on the glass surface (3-1) at a temperature T₁ that is lower or equal to the transformation temperature of the glass type used for the glass pane (1, 2, 3), whereby
- the spacers (5, 501, 502) comprise a crystallized phase whose ratio is greater than or equal to 70 % by volume,
- the spacers (5, 501, 502) have the geometrical shape of a spherical slice with a tangential angle α in the range between 55° and 90° and a diameter of a first contact area (5-2), on which they are rigidly connected with one of the adjacent glass panes(1, 2, 3), and amount to between 100 µm and 1000 µm,
- a difference of the thermal expansion coefficients between the spacers (5, 501, 502) and the adjacent glass pane (1, 2, 3) which is less than or equal to ± 5·10⁻⁶ K⁻¹.

7. Method according to claim 6, in which
- the steps application of spacer particles (500) and heat treatment on a second glass surface (3-2) of the glass pane (3) are repeated, whereby the heat treatment on the second glass surface (3-2) is performed at a temperature T₂ which is lower than or equal to temperature T₁.

8. Method according to one of the claims 6 to 7, in which the application of the spacer particles (5, 501, 502) comprises at least one of the following methods:
- application of the spacer particles (5, 501, 502) through at least one guide plate comprising openings,
- application of the spacer particles (5, 501, 502) through a transfer medium, in particular a foil, whereby the transfer medium comprises structures or perforations or coupling agents to collect the spacer particles,
- application of the spacer particles (5, 501, 502) through a vacuum and/or electrostatic forces, and
- application of the spacer particles (5, 501, 502) through magnetic forces.

9. Method according to any one of claims 6 to 8, comprising the step
- provision of organic adhesives or coupling agents for the adhesion of the spacer particles (500) on the glass panes (1, 2, 3), where by substances are provided as organic adhesives or coupling agents which can be removed without leaving behind a residue before or during a heat treatment, which are in particular evaporated, burnt or pyrolysed, in particular acrylate compounds, acetate compounds, cellulose compounds, waxes, resins and/or the substances used directly before as bonding agent and solvent combinations for the manufacture of the spacer particles.

10. Method according to any one of claims 6 to 9, in which
- the spacer particles (500) are provided with a mechanical shaping method, in particular by means of pressing, injection moulding and/or punching, or by means of a fluidized bed method, in particular by means of spray granulation and/or agglomeration.

11. Method according to any one of claims 6 to 10, comprising the step
- creation of the spherical slice shape of the spacers by means of rubbing off spacer material on the contact sites (5-1) in a stacked arrangement by means of a forced relative movement between at least one part of the spacers (5, 501, 502) and one complimentary surface abutting directly and evenly against the contact areas (5-1) of the spacers with exposure to compressive forces or by means of a grinding or milling unit.

12. Method according to any one of claims 6 to 11, in which
- the spacer particles (500) comprise magnetisable and/or magnetic additives and/or at least a modification substance, suitable to influence the crystallization, the friction reduction, for coloration, to influence the electrical or electrostatic properties, in particular an electrostatic chargeability or antistatic effect, to improve the vacuum through implementation of materials with a gettering effect, to improve the compression strength, to influence the contact power and adhesive strength, to improve the radiation absorption properties (e.g. microwave absorption, etc.) or combinations thereof.

13. Method for the manufacture of a heat insulating glazing element (10), comprising the steps:
- provision of a glazing element per the claims 1 to 5,
- evacuation of the glazing element by applying a vacuum to one evacuation opening, und
- closure of the evacuation opening.

14. Method according to claim 13, in which
- at least one of the glass panes of the glazing element is manufactured by means of a method per claims 6 to 12.

15. Method according to claim 13 or 14, in which
- three glass panes (1, 2, 3) are planned, of which none of the edges of the middle glass pane (3) are rigidly connected with the edge seal (6, 601) and which can be moved between the glass panes (1, 2).

16. Method according to any one of claims 13 to 15, comprising the steps
- attachment of the evacuation tube (7),
- application of edge seal(6, 601) and/or sealing materials, and
- founding of the edge seal (6, 601) and/or sealing materials to achieve a pressure tight seal on the edge of the glazing element (10) and on the evacuation tube (7), followed by
- evacuation of the glazing elements (10) at increased temperatures to a final pressure in the range of 10⁻¹ Pa to 10⁻³ Pa or lower, and
- pressure tight sealing of the evacuation tube (7), and
- cooling of the glazing element (10) to room temperature.

## Revendications

1. Élément (10) de vitrage isolant, qui comprend :
- un arrangement de plaques de verre comportant au moins deux plaques (1, 2, 3) de verre qui présentent des distances mutuelles prédéterminées, sachant que des espaces (4, 4-1, 4-2) où il est possible de faire le vide sont formés entre les plaques (1, 2, 3) de verre,
- un moyen d'étanchéité de bordures (6, 601) qui est installé avec un matériau d'étanchéité de bordures pour l'étanchéité entre les espaces (4, 4-1, 4-2) formés entre les plaques de verre et un environnement de l'élément de vitrage, et
- un moyen d'écartement, installé en vue du réglage de l'écartement des plaques de verre et qui comprend des écarteurs (5, 501, 502),
**caractérisé en ce que**
- les écarteurs (5, 501, 502) contiennent un verre de scellement ou une fritte de verre,
- les écarteurs (5, 501, 502) contiennent au moins une substance de cristallisation qui convient pour former des germes de cristallisation et/ou favoriser la formation de germes de cristallisation et/ou favoriser la formation de phases cristallines dans le verre de scellement ou dans la fritte de verre et qui comprend au moins un matériau céramique ou un métal ou un fluorure, chacun étant insoluble ou difficilement soluble dans le verre en fusion, et une substance réductrice,
- les écarteurs (5, 501, 502) contiennent une phase cristallisée dont la proportion est supérieure ou égale à 70% en volume,
- les écarteurs (5, 501, 502) présentent la forme géométrique d'un segment sphérique avec un angle tangentiel α compris entre 55° et 90° et un diamètre d'une première surface (5-2) de contact par laquelle ils sont rigidement assemblés à une des plaques (1, 2, 3) de verre adjacentes, entre 100 µm et 1000 µm, sachant qu'ils présentent une deuxième surface (5-1) de contact faisant face, par laquelle ils sont disposés sur la plaque (1, 2, 3) de verre adjacente et sont librement mobiles,
- une différence des coefficients de dilatation thermique entre les écarteurs (5, 501, 502) et les plaques (1, 2, 3) de verre, avec lesquelles les écarteurs sont rigidement assemblés au niveau de la première surface (5-2) de contact, est inférieure ou égale à ± 5.10⁻⁶ K⁻¹.

2. Élément de vitrage selon la revendication 1, pour lequel les écarteurs contiennent :
- du verre de scellement contenant du plomb, avec une teneur en oxyde de plomb d'au moins 15 % en masse, notamment du verre au borosilicate de plomb-zinc, verre au silicate de plomb-zinc, verre au borosilicate de plomb-aluminium, verre de scellement sans plomb, notamment verre phosphaté au zinc, verre au borosilicate alcalin avec des proportions de zinc et/ou de bismuth, et/ou verre de scellement contenant du bismuth avec une teneur en oxyde de bismuth d'au moins 15 % en masse.

3. Élément de vitrage selon l'une des revendications précédentes, pour lequel la substance de cristallisation comprend :
- un matériau céramique qui comprend les éléments zircon et/ou titane, notamment du silicate de zirconium, de l'oxyde de zirconium, de l'oxyde de titane, du titanate (p. ex. du titanate de plomb) et/ou des combinaisons de ceux-ci, de préférence avec une proportion de 0,5 à 20 % en masse,
- Pd, Cu, Ag ou Au,
- des fluorures alcalins ou alcalino-terreux, tels que NaF, KF, CaF₂ ou MgF₂, et/ou
- des composés de fer(II), d'étain (II).

4. Élément de vitrage selon la revendication 1, pour lequel
- un rapport de la deuxième surface (5-1) de contact à la première surface (5-2) de contact est inférieur ou égal à 0,75.

5. Élément de vitrage selon l'une des revendications précédentes, pour lequel
- les écarteurs (5, 501, 502) contiennent des substances absorbant la lumière, qui comprennent des oxydes, notamment des oxydes de manganèse ou de fer, des métaux, notamment Fe, des pigments inorganiques, notamment des combinaisons Co, Cu, Cr, Fe, Mn et/ou des mélanges de ceux-ci et/ou d'autres substances inorganiques absorbant la lumière, sachant qu'une concentration inférieure ou égale à 10 % en masse, notamment inférieure ou égale à environ 5 % en masse, est prévue.

6. Procédé en vue de la fabrication d'une plaque (1, 2, 3) de verre munie d'écarteurs, comportant les étapes :
- Mise à disposition de particules (500) d'écarteur, qui contiennent un verre de scellement ou une fritte de verre, contiennent au moins une substance de cristallisation, qui convient pour former des germes de cristallisation et/ou favoriser la formation de germes de cristallisation et/ou favoriser la formation de phases cristallines dans le verre de scellement ou dans la fritte de verre et qui comprend au moins un matériau céramique ou un métal ou un fluorure, chacun étant insoluble ou difficilement soluble dans le verre en fusion, et une substance réductrice, et qui possèdent une dimension de section caractéristique comprise entre 150 µm et 1000 µm, et de la plaque (1, 2, 3) de verre,
- Application des particules (500) d'écarteur sur une première surface de verre (3-1), et
- Formation des écarteurs par un traitement thermique des particules (500) d'écarteur, comprenant une fusion, une cristallisation et un développement de la géométrie des écarteurs sur la surface (3-1) du verre, à une température T₁, qui est inférieure ou égale à la température de transformation du type de verre utilisé pour la plaque (1, 2, 3) de verre, sachant que
- les écarteurs (5, 501, 502) contiennent une phase cristallisée dont la proportion est supérieure ou égale à 70 % en volume,
- les écarteurs (5, 501, 502) présentent la forme géométrique d'un segment sphérique avec un angle tangentiel α compris entre 55° et 90° et un diamètre d'une première surface (5-2) de contact par laquelle ils sont rigidement assemblés à la plaque (1, 2, 3) de verre adjacente entre 100 µm et 1000 µm,
- une différence des coefficients de dilatation thermique entre les écarteurs (5, 501, 502) et la plaque (1, 2, 3) de verre adjacente est inférieure ou égale à ± 5.10⁻⁶ K⁻¹.

7. Procédé selon la revendication 6, pour lequel
- les étapes d'application de particules (500) d'écarteur et de traitement thermique sont répétées sur une deuxième surface (3-2) de verre de la plaque (3) de verre, sachant que le traitement thermique sur la deuxième surface (3-2) de verre s'effectue à une température T₂ qui est inférieure ou égale à la température T₁.

8. Procédé selon l'une des revendications 6 à 7, pour lequel l'application des particules (5, 501, 502) d'écarteur comprend au moins l'un des procédés suivants :
- Application des particules (5, 501, 502) d'écarteur par au moins un gabarit muni d'orifices,
- Application des particules (5, 501, 502) d'écarteur par un milieu de transfert, notamment un film, sachant que le milieu de transfert contient des structures ou des perforations ou un agent adhésif pour le logement des particules d'écarteur,
- Application des particules (5, 501, 502) d'écarteur par une dépression et/ou des forces électrostatiques,
- Application des particules (5, 501, 502) d'écarteur par des forces magnétiques.

9. Procédé selon l'une des revendications 6 à 8, comportant l'étape
- Mise à disposition de produits adhésifs ou collants organiques pour l'adhérence des particules (500) d'écarteur sur les plaques (1, 2, 3) de verre, sachant que sont prévues, en tant que produits adhésifs ou collants organiques, des substances qui se laissent éliminer sans résidus avant ou pendant un traitement thermique, notamment volatiliser, brûler ou pyrolyser, notamment des composés acryliques, composés d'acétate, composés cellulosiques, cires, résines et/ou substances déjà utilisées directement comme combinaisons solvants-liants pour la fabrication des particules d'écarteur.

10. Procédé selon l'une des revendications 6 à 9, pour lequel
- les particules (500) d'écarteur sont mises à disposition par un procédé de moulage mécanique, notamment par pression, par injection et/ou estampage ou par un procédé de lit fluidisé, notamment par granulation par pulvérisation et/ou agglomération.

11. Procédé selon l'une des revendications 6 à 10, comportant l'étape
- Formation du moule de segment sphérique des écarteurs par abrasion du matériau d'écarteur en des points (5-1) de contact dans un empilement, au moyen d'un mouvement relatif forcé entre au moins une partie des écarteurs (5, 501, 502) et une surface complémentaire appliquée régulièrement directement sur les surfaces de contact (5-1) des écarteurs, sous l'effet de forces de pression ou au moyen d'un équipement de ponçage ou de fraisage.

12. Procédé selon l'une des revendications 6 à 11, pour lequel
- les particules (500) d'écarteur contiennent des additifs aimantables et/ou magnétiques et/ou au moins une substance de modification qui convient pour influencer la cristallisation, pour réduire les frottements, pour colorer, pour influencer les caractéristiques électriques ou électrostatiques, notamment une possibilité de charge électrostatique ou un effet antistatique, pour améliorer le vide par l'implémentation de matériaux à effet getter, pour améliorer la résistance à la compression, pour influencer l'adhésivité ou le pouvoir collant, pour améliorer les propriétés d'absorption de rayonnements (p. ex. absorption des microondes, etc.) ou pour des combinaisons de ce qui précède.

13. Procédé en vue de la fabrication d'un élément (10) de vitrage isolant, comportant les étapes :
- Mise à disposition d'un élément de vitrage isolant selon l'une des revendications 1 à 5,
- Mise au vide de l'élément de vitrage isolant par application d'une dépression au niveau d'une ouverture de mise au vide, et
- Obturation de l'ouverture de mise au vide.

14. Procédé selon la revendication 13, pour lequel
- au moins une des plaques de verre de l'élément de vitrage est fabriquée par un procédé selon l'une des revendications 6 à 12.

15. Procédé selon la revendication 13 ou 14, pour lequel
- trois plaques (1, 2, 3) de verre sont prévues, parmi lesquelles la plaque (3) de verre médiane n'est rigidement assemblée par aucune des bordures à l'étanchéité (6, 601) de bordures et peut être déplacée entre les plaques de verre (1, 2).

16. Procédé selon l'une des revendications 13 à 15, comportant les étapes
- Mise en place du tube (7) de mise au vide,
- Application de matériaux de scellement (6, 601) des bordures et/ou d'étanchéité, et
- Fusion des matériaux de scellement (6, 601) des bordures et/ou d'étanchéité pour le scellement résistant à la pression en bordure de l'élément (10) de vitrage et sur le tube (7) de mise au vide, sachant qu'ensuite
- la mise au vide des éléments (10) de vitrage s'effectue à des températures plus élevées jusqu'à une pression finale de l'ordre de 10⁻¹ Pa à 10⁻³ Pa ou moins, et que
- l'obturation résistant à la pression du tube (7) de mise au vide est effectuée, et qu'
- un refroidissement des éléments (10) de vitrage à la température ambiante est prévu.
